# EUROPEAN PATENT SPECIFICATION

(11) **EP 4 369 857 B1**
(45) Date of publication and mention of the grant of the patent: **18.03.2026**
(21) Application number: 21950597.1
(22) Date of filing: 23.07.2021
(51) Int. Cl.: H05B 1/00, A45D 20/12, H05B 1/02, H02M 1/08, H02M 7/12, H02H 3/02, H02H 3/08

(54) **POWER SUPPLY CIRCUIT STRUCTURE, DRYING DEVICE, POWER SUPPLY KIT AND POWER SUPPLY METHOD**
STROMVERSORGUNGSSCHALTUNGSSTRUKTUR, TROCKNUNGSVORRICHTUNG, STROMVERSORGUNGSKIT UND STROMVERSORGUNGSVERFAHREN
STRUCTURE DE CIRCUIT D'ALIMENTATION ÉLECTRIQUE, DISPOSITIF DE SÉCHAGE, KIT D'ALIMENTATION ÉLECTRIQUE ET PROCÉDÉ D'ALIMENTATION ÉLECTRIQUE

(43) Date of publication of application: 15.05.2024
(73) Proprietor: SZ Zuvi Technology Co., Ltd., Shenzhen, Guangdong 518063 (CN)
(72) Inventor: XU, Xingwang, Shenzhen, Guangdong 518063 (CN)
(74) Representative: Appelt, Christian W.
(86) International application number: PCT/CN2021/108296
(87) International publication number: WO 2023/000348

(56) References cited:
- CN-A- 1 836 198
- CN-A- 102 958 255
- CN-U- 208 638 248
- US-A- 5 004 957
- US-A1- 2013 249 428
- US-A1- 2019 343 258

## Description

### CROSS-REFERENCE

This application claims to priority to International Application No. PCT/CN2021/108296, filed on July 23, 2021.

### FIELD OF THE INVENTION

The present disclosure relates to the field of electrical equipment, specifically to a power supply circuit structure, apparatus for drying an object, power supply kit, power supply method.

### BACKGROUND OF THE INVENTION

In related technology, when powering the hair dryer by accessing the alternating current power source, it is necessary to rectify the alternating current to obtain a direct current, so as to power the hair dryer with a direct current. In practice, the alternating current has different electrical parameter standards, and for a hair dryer using one or more radiation energy sources as a heat source, the alternating current with different parameter standards will cause one or more radiation energy sources to be unable to radiate the light of predetermined frequency range, resulting in unstable heat generation.

US 2013/249428 A1 describes a two-wire load control device, which is operable to control the amount of power delivered from an AC power source to an electrical load. The dimmer switch includes a bidirectional semiconductor switch, which is operable to be rendered conductive each half-cycle and to remain conductive independent of the magnitude of a load current conducted through semiconductor switch. The dimmer switch comprises a control circuit that conducts a control current through the load in order to generate a gate drive signal for rendering the bidirectional semiconductor switch conductive and non-conductive each half-cycle. The control circuit may provide a constant gate drive to the bidirectional semiconductor switch after the bidirectional semiconductor switch is rendered conductive each half-cycle. The bidirectional semiconductor switch may comprise, for example, a triac or two field-effect transistors coupled in anti-series connection.

US 5,004,957 A describes a circuit and a method for controlling the dimming of incandescent lights using a pair of antiparallel connected SCRs which are fired at the same frequency as the frequency of the AC line power to achieve phase control of the power supplied to the light.

US 2019/343258 A1 describes a hair styling device, in which a light emitting diode is configured to deliver optical energy to hair. The light emitting diode is pulse-driven. The hair styling device may comprise an optical shield configured to block stray light during light exposure of the hair. An inner surface of the optical shield may be reflective and/or may have a parabolic shape.

### SUMMARY OF THE INVENTION

The present invention relates to a drying apparatus according to claim 1 and a method according to claim 6. Claims 2 to 5 refer to specifically advantageous realizations of the drying apparatus according to claim 1. Claims 7 to 10 refer to specifically advantageous realizations of the method according to claim 6.

Aspects of the present disclosure provide a power supply circuit structure, apparatus for drying an object, power supply kit, power supply method.

An aspect of the present disclosure provides a power supply circuit structure, for connecting a power source and supplying power to one or more radiation energy sources, the power source provides a periodically varying alternating current electrical signal, the one or more radiation energy sources are capable of radiating light of predetermined frequency range, the power supply circuit structure comprises: a main control circuit, configured to receive and detect the alternating current electrical signal, generates a control signal of the same frequency as the alternating current electrical signal based on the predetermined frequency range, wherein the control signal comprises a zero-amplitude portion; a signal conduction circuit, configured to receives the alternating current electrical signal and the control signal, and generates an output signal, wherein the magnitude of the output signal is zero in the zero-amplitude portion of the control signal, and in the rest of the control signal, the magnitude of the output signal corresponds to the magnitude of the alternating current electrical signal; when being input with the output signal, the one or more radiation energy sources are configured to radiate light within the predetermined frequency range.

The above power supply circuit structure, by varying the percentage of zero-amplitude portion in control signal, it allows for precise adjustment of the power output from the power supply circuitry to the one or more radiation energy sources, thus enabling the one or more radiation energy sources to radiate light within the predetermined frequency range, and thus ensuring a good heating and drying effect of the one or more radiation energy sources.

An aspect of the present disclosure provides a drying apparatus, comprises: a housing; one or more radiation energy sources;the power supply circuit structure mentioned above, the one or more radiation energy sources and the power supply circuit structure are arranged within the housing, the one or more radiation energy sources are capable of connecting the power supply circuit structure.

The above apparatus for drying an object, by varying the percentage of zero-amplitude portion in control signal, it allows for precise adjustment of the power output from the power supply circuitry to the one or more radiation energy sources, thus enabling the one or more radiation energy sources to radiate light within the predetermined frequency range, and thus ensuring a good heating and drying effect of the one or more radiation energy sources.

An aspect of the present disclosure provides a power supply kit, comprises: a drying apparatus, comprising one or more radiation energy sources; a power supply apparatus, comprising the power supply circuit structure mentioned above; the drying apparatus is removably mounted to the power supply apparatus, with an electrically conductive assembly for conducting the power supply circuit structure and the one or more radiation energy sources through at a junction of the drying apparatus and the power supply apparatus.

The above power supply kit, by varying the percentage of zero-amplitude portion in control signal, it allows for precise adjustment of the power output from the power supply circuitry to the one or more radiation energy sources, thus enabling the one or more radiation energy sources to radiate light within the predetermined frequency range, and thus ensuring a good heating and drying effect of the one or more radiation energy sources.

An aspect of the present disclosure provides a method of supplying power, for a power supply circuit structure, the power supply circuit structure for connecting a power source and supplying power to one or more radiation energy sources, the power source providing a periodically varying alternating current electrical signal, the one or more radiation energy sources capable of radiating light of predetermined frequency range, the method comprises: receiving and detecting the alternating current electrical signal; generating a control signal of the same frequency as the alternating current electrical signal based on the predetermined frequency range, the control signal comprises a zero-amplitude portion, in the process of generating an output signal based on both the alternating current electrical signal and the control signal , the magnitude of the output signal is zero during the zero-amplitude portion of the control signal, and in the rest of the control signal, the magnitude of the output signal corresponds to the magnitude of the alternating current electrical signal.

The above power supply method, by varying the percentage of zero-amplitude portion in control signal, it allows for precise adjustment of the power output from the power supply circuitry to the one or more radiation energy sources, thus enabling the one or more radiation energy sources to radiate light within the predetermined frequency range, and thus ensuring a good heating and drying effect of the one or more radiation energy sources.

Additional aspects and advantages of the present disclosure will be given, in part, in the following description, in part as will become apparent from the following description or as will be learned through the practice of the present disclosure.

### BRIEF DESCRIPTION OF THE DRAWINGS

The above-mentioned and/or additional aspects and advantages of this application will become evident and easily understood from the description of the embodiments in the following figures, wherein:
FIGS. 1-10 are schematic diagrams of the module structure of the power supply circuit structure in accordance with some embodiments of the disclosure;
FIG. 11 is a schematic diagram of a portion of the structure of the power supply circuit structure of some embodiments of the disclosure;
FIG. 12 is a schematic diagram of each of the signals of an embodiment of the disclosure over time;
FIG. 13 is a schematic diagram of the module structure of the apparatus for drying an object of an embodiment of the disclosure;
FIG. 14 is a schematic diagram of the module structure of the power supply kit of an embodiment of the disclosure; the embodiment of FIG. 14 is not encompassed by the wording of the claims but is considered as useful for understanding the invention;
FIGS. 15-FIG. 23 are flowcharts of the power supply method of an embodiment of the present disclosure.

Description of the main attached components:
power supply circuit structure 100, apparatus for drying an object 200, power source 300, power supply apparatus 400;
main control circuit 11, control unit 111, random phase circuit 112, signal conduction circuit 12, light sensor 13, sampling unit 14, protection circuit 15, rectifier circuit 16, monitoring circuit 17, output rectifier unit 181, output filter unit 182, the zero-crossing detection circuit 19;
one or more radiation energy sources 21, housing 22;
electrically conductive assembly 51.

### DETAILED DESCRIPTION OF THE INVENTION

Embodiments of the present disclosure are described in detail below, and examples of said embodiments are illustrated in the accompanying drawings, wherein the same or similar labeling throughout denotes the same or similar elements or elements having the same or similar function. The embodiments described below by reference to the accompanying drawings are exemplary and are intended solely for the purpose of explaining the present disclosure and are not to be construed as a limitation of the present disclosure.

In the description of the application, the terms "first" and "second" are used for descriptive purposes only and are not to be understood as indicating or implying relative importance or implicitly specifying the number of technical features indicated. Thus, a feature defined with the terms "first", "second" may expressly or implicitly include one or more of the described features. In the description of the application, "more than one" means two or more, unless otherwise expressly and specifically limited.

In the description of the present disclosure, it is to be noted that, unless otherwise expressly specified and qualified, the terms "mounted", "connected", "connected" are to be understood in a broad sense, e.g., they may be fixed, removable, or integrally connected. They may be mechanical or electrical. It may be a direct connection or an indirect connection through an intermediate medium, a connection within two elements or an interaction between two elements. For those of ordinary skill in the art, the specific meaning of the above terms in this application may be understood on a case-by-case basis.

The following disclosure provides many different embodiments or examples used to realize the different structures of the present disclosure. In order to simplify the disclosure of the present disclosure, the parts and settings of particular examples are described below. They are, of course, only examples and are not intended to limit the present disclosure. In addition, the present disclosure may repeat reference numerals and/or reference letters in various examples, such repetition being for purposes of simplification and clarity and not in itself indicative of a relationship between the various embodiments and/or settings discussed. In addition, various specific examples of processes and materials are provided in this application, but one of ordinary skill in the art may realize the application of other processes and/or the use of other materials.

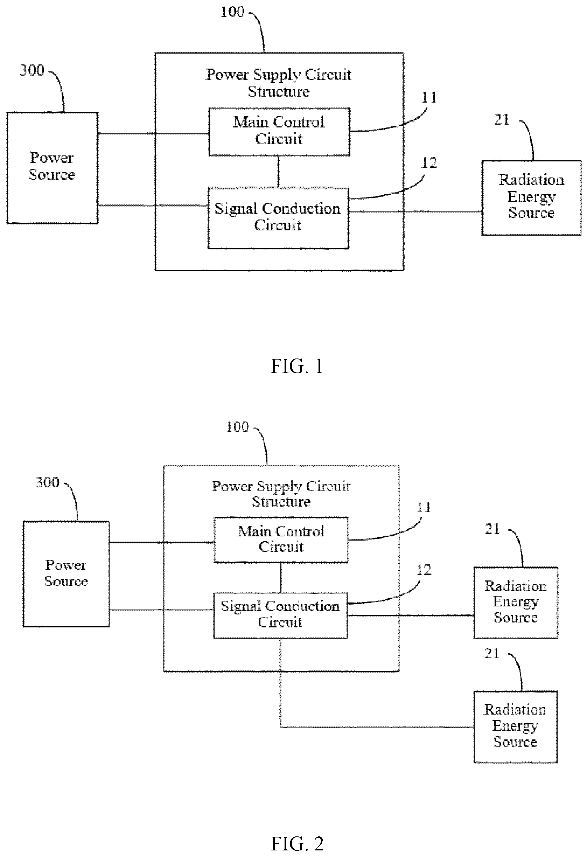

Referring to FIG. 1 and FIG. 2, an embodiment of the present disclosure provides a power supply circuit structure 100 for connecting a power source 300 to power one or more radiation energy sources 21. The power source 300 is capable of providing a periodically varying alternating current electrical signal, which, as is known in common knowledge, is a type of current whose current direction varies periodically from time to time, and, in a more specific embodiment, power source 300 can be configured for supplying the mains/utility frequency alternating current. The one or more radiation energy sources 21 are electrical elements capable of radiating light after being energized, and the frequency band of light radiated by it is related to the electrical signal being energized, i.e., if it is necessary for one or more radiation energy sources 21 to radiate a certain frequency band of light, it is necessary to energize an electrical signal of the corresponding power. The power supply circuit structure 100, during operation, receives the alternating current electrical signal and generates an output signal after adjustment. When being input with the output signal, the one or more radiation energy sources 21 are configured to radiate light within the predetermined frequency range. In other words, the power of output signal is the input power of one or more radiation energy sources 21.

The power supply circuit structure 100 specifically includes a main control circuit 11 and a signal conduction circuit 12. The main control circuit 11 is connected to the power source 300, receives and detects the alternating current electrical signal, generates the control signal based on the predetermined frequency range. The control signal and the alternating current electrical signal are of the same frequency, i.e., they have the same period. The control signal comprises a zero-amplitude portion, i.e., the portion of amplitude zero, within the control signal. It is readily appreciated that since the control signal is a periodic signal, the percentage of zero-amplitude portion described below represents the percentage of zero-amplitude portion within each cycle of control signal. The signal conduction circuit 12 is configured to generate the output signal based on the alternating current electrical signal and the control signal. The output signal is likewise of the same frequency as the alternating current electrical signal, i.e., has the same period. In the zero-amplitude portion of the control signal, the amplitude of the output signal is zero and no power is output; in the rest of the control signal, the amplitude of the output signal corresponds to the magnitude of the alternating current electrical signal. The output signal generated by the above process is passed into the one or more radiation energy sources 21 so that the one or more radiation energy sources 21 can radiate light within the predetermined frequency range.

It is readily appreciated that the power provided by power source 300 is much greater than the power required by the one or more radiation energy sources 21, and thus the process of generating the output signal based on the alternating current electrical signal is the process of reducing the power of the alternating current electrical signal as required. In the above-described process of the power supply circuit structure 100 generating the output signal based on the alternating current electrical signal and the predetermined frequency range, the determined percentage of zero-amplitude portion, equates to cutting off the power within the segment of the alternating current electrical signal corresponding to the zero-amplitude portion in each cycle, so that after reducing the power of the truncated portion from the alternating current electrical signal, the output signal satisfying the need for power supply of the one or more radiation energy sources 21 is generated, and the process of supplying power to the one or more radiation energy sources 21 is realized and enabling the one or more radiation energy sources 21 to radiate light within the predetermined frequency range.

In other words, by varying the percentage of zero-amplitude portion in control signal, it allows for precise adjustment of the power output from the power supply circuitry 100 to the one or more radiation energy sources 21, thus enabling the one or more radiation energy sources 21 to radiate light within the predetermined frequency range, and thus ensuring a good heating and drying effect of the one or more radiation energy sources 21.

Furthermore, when the number of one or more radiation energy sources 21 is a plurality, in some embodiments, the plurality of radiation energy sources 21 may be sequentially connected in series or connected in parallel with each other. Specifically, whether the plurality of radiation energy sources 21 are connected in series or in parallel should be determined on a case-by-case basis or through actual testing.

For illustrative purposes, subsequent embodiments will explain scenarios considering a single radiation source 21. It will be appreciated that in the case where the number of radiation energy sources 21 is more than one, an equivalent radiation energy source 21 can be derived based on the topology among the plurality of radiation energy sources 21, such that the plurality of radiation energy sources 21 can be viewed as a single one radiation energy source 21, and the inputs to the plurality of radiation energy sources 21 remain as the output signal generated by the signal conduction circuit 12.

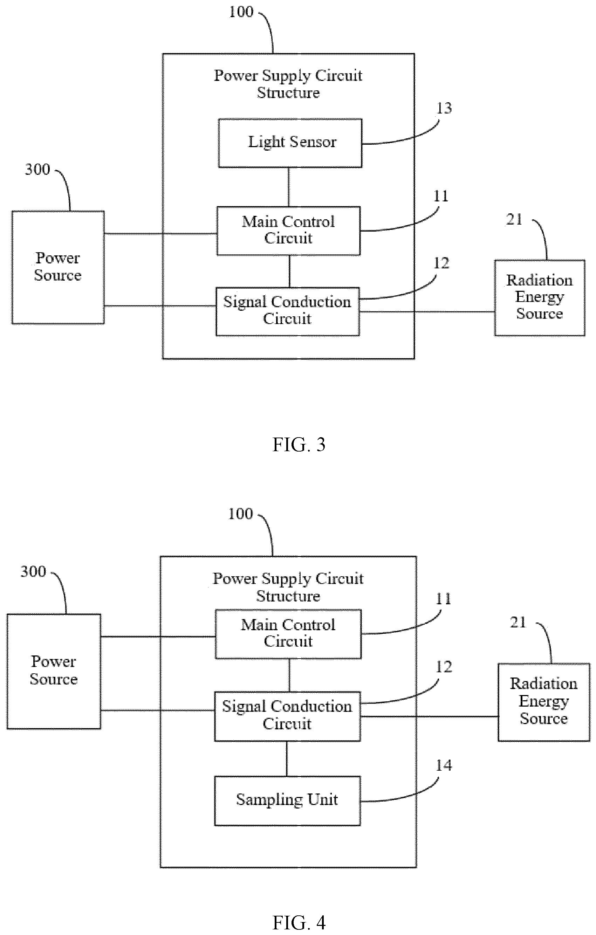

Referring to FIG. 3, the power supply circuit structure 100 comprises a light sensor 13, which is configured to detect the frequency of light radiated by the radiation energy source 21 and send the obtained data to the main control circuit 11. The main control circuit 11 is configured to adjust the control signal when the frequency of light is outside of the predetermined frequency range to ensure that, upon receiving the adjusted output signal, the frequency of the light radiated by the radiation energy source 21 returns to the predetermined frequency range.

In this way, the input power of radiation energy source 21, i.e., the power of the output signal generated by signal conduction circuit 12, can be adjusted by feedback from the frequency of light actually radiated by radiation energy source 21.

Specifically, in connection with FIG. 3, the light sensor 13 may be set at a position where the light radiated by the radiation energy source 21 can be irradiated, so that the light sensor 13 can receive the light radiated by the radiation energy source 21 and detect the frequency of light, and the obtained data is sent to the main control circuit 11. When the detected frequency of light is within the predetermined frequency range, it is possible to determine that the radiation energy source 21 radiated the light at the predetermined frequency range, and thus to correspondingly, it can be determined that the output signal energized to the radiation energy source 21 can satisfy the power supply requirements. When the detected frequency of light is outside of the predetermined frequency range, it can be determined that the current output signal fails to satisfy the power supply requirements of the radiation energy source 21, and at this time, the control signal is adjusted by the main control circuit 11, and the output signal is correspondingly adjusted by the signal conduction circuit 12, and the adjusted output signal is energized to the radiation energy source 21, and the frequency of light of the radiation energy source 21 is detected again by the light sensor 13. If the frequency of light returns to the predetermined frequency range at this time, the adjustment process is completed, and if it remains outside the predetermined frequency range, the adjustment process described above is repeated again until the purpose of adjusting the frequency of light radiated by the radiation of radiation energy source 21 to be within predetermined frequency range is finally achieved. It is easy to understand that the radiation process of the radiation energy source 21 is a continuous process, and if the output signal itself fluctuates, the frequency of light radiated by the radiation energy source 21 will immediately change accordingly, so the above process of detecting the feedback and adjusting the output signal through the light sensor 13 is a continuous closed-loop control process, which detects the feedback in real time and maintains the dynamic adjustment to ensure that the light radiated by the radiation energy source 21 is within the predetermined frequency range when it is continuously working.

In an embodiment, upon determining that the frequency of light radiated by the radiation energy source 21 is lower than the predetermined frequency range, then it may be determined that the input power of the radiation energy source 21 is low, which in turn may send a first output signal adjustment message to the main control circuit 11 by the light sensor 13, such that the main control circuit 11, upon receiving the first output signal adjustment message, decreases the percentage of the zero-amplitude portion in the control signal, such that the alternating current electrical signal is able to output more power to the radiation energy source 21 during a cycle, which in turn may increase the frequency of light radiated by radiation energy source 21 to within the predetermined frequency range.

In another embodiment, upon determining that the frequency of light radiated by the radiation energy source 21 is higher than the predetermined frequency range, then it may be determined that the input power of the radiation energy source 21 is high, which in turn may send a second output signal adjustment message to the main control circuit 11 by the light sensor 13, such that the main control circuit 11, upon receiving the second output signal adjustment message, increases the percentage of the zero-amplitude portion in the control signal, such that the alternating current electrical signal to be able to output less power to radiation energy source 21 during a cycle, which in turn may reduce the frequency of light radiated by radiation energy source 21 to within the predetermined frequency range.

In other embodiment, the signal sent by light sensor 13 to main control circuit 11 may also only contains the detected frequency of light. After receiving the signal, the main control circuit 11 compares the frequency of light with the predetermined frequency range to determine whether an adjustment of the control signal is required, and the manner in which the adjustment of the control signal is to be made, e.g., increasing or decreasing the percentage of the zero-amplitude portion.

Summing up the above, in some embodiments, when the frequency of light radiated by the radiation energy source 21 needs to be adjusted, the main control circuit 11 adjusts the control signal, and the power of the output signal can be adjusted by varying the percentage of the zero-amplitude portion, which in turn causes the frequency of light radiated by the radiation energy source 21 is within the predetermined frequency range.

Alternatively, in other embodiments, the predetermined frequency range may be determined by a specific situation or may be calibrated based on actual testing. The specific situation may be the actual use of the power supply circuit structure 100 in order to charge the apparatus for drying an object 100, and the user may artificially adjust the predetermined frequency range based on the actual needs, so that the adjusted predetermined frequency range can meet the user's needs. The actual test can be in the power supply circuit structure 100 factory parameters for calibration of parameter testing, through the power supply circuit structure 100 factory parameters calibration, can be clear the predetermined frequency range specific range, so that do not need to be used in the process of setting again.

In some embodiments, a fixed frequency band may be preset as the predetermined frequency range, and the radiation energy source 21 radiates only light within the predetermined frequency range during operation.

In some embodiments, the predetermined frequency range can be adjusted in response to an external operation, i.e., the radiation energy source 21 can be adjusted to radiate a different frequency of light while in operation. It is readily appreciated that in this embodiment, real-time adjustments need to be made to the control signal in response to the adjusted frequency of light in order to enable the radiation energy source 21 to achieve an adjustable effect.

In some embodiments, the light located within the predetermined frequency range is infrared light.

Specifically, in an embodiment, when the radiation energy source 21 radiates infrared light, the radiation energy source 21 can be made to have a heating and drying effect by the property of radiating the infrared light to an object to cause the object to be radiated to be warmed.

Referring to FIG. 4, the power supply circuit structure 100 comprises a sampling unit 14. The sampling unit 14 is configured to sample the electrical parameter values of the output signal, and when the electrical parameter values obtained from the sampling is outside of the predetermined parameter threshold range, the main control circuit 11 is configured to adjust the control signal so that the electrical parameter values of the output signal obtained from the adjustment is within the predetermined parameter threshold range.

In this way, the input power of the radiation energy source 21 can be adjusted by the electrical parameter values feedback from the output signal.

In an embodiment, the electrical parameter values of the output signal may be determined on a case-by-case basis or may be calibrated based on actual testing. In a specific embodiment, the electrical parameter values of the output signal may be a voltage value of the output signal, may be a current value of the output signal, or may be a power of the output signal.

Specifically, in connection with FIG. 4, when the electrical parameter values obtained from the sampling unit 14 sampling is within the predetermined parameter threshold range, then it can be determined that the radiation energy source 21 radiate light within the predetermined frequency range. And when the electrical parameter values obtained from the sampling unit 14 sampling is outside of the predetermined parameter threshold range, then it can be determined that the radiation energy source 21 fails to radiate the light within the predetermined frequency range, and at this time, the control signal is adjusted through the main control circuit 11, and then the output signal can be correspondingly adjusted to bring the electrical parameter values return to the predetermined parameter threshold range, and ultimately, the purpose of adjusting the radiation energy source 21 to radiate the light within the predetermined frequency range can be achieved. It is easily understood that in this embodiment, the process of making adjustments for the control signal is also a continuous dynamic adjustment process, whereby the sampling unit 14 samples the electrical parameter values of the output signal in real time, and adjusts it when it is outside of the predetermined parameter threshold range, and if the adjusted electrical parameter values of the output signal still is outside of the predetermined parameter threshold range, then the main control circuit 11 continues to make adjustments until the electrical parameter values of the output signal is within the predetermined parameter threshold range.

In an embodiment, upon determining that the electrical parameter values obtained from the sampling by sampling unit 14 is lower than the predetermined parameter threshold range, then it may be determined that the input power to the radiation energy source 21 is low, such that the frequency of light radiated by the radiation energy source 21 is also low, and thus a third output signal adjustment message may be sent to the main control circuit 11 by the sampling unit 14, such that the main control circuit 11, upon receipt of the third output signal adjustment message, decreases the percentage of zero-amplitude portion in control signal and increase the electrical parameter values of the output signal until it is in the predetermined parameter threshold range, whereby it may be determined that the alternating current electrical signal is capable of outputting more power to the radiation energy source 21 during a cycle, which in turn may increase the frequency of light radiated by the radiation energy source 21 to within the predetermined frequency range.

In another embodiment, in determining that the electrical parameter values obtained from the sampling by sampling unit 14 is higher than the predetermined parameter threshold range, then it may be determined that the input power of the radiation energy source 21 is high, such that the frequency of light radiated by the radiation energy source 21 is also high, and thus a fourth output signal adjustment message may be sent by the sampling unit 14 to the main control circuit 11, such that the main control circuit 11, upon receiving the fourth output signal adjustment message, increases the percentage of the zero-amplitude portion in the control signal and decrease the electrical parameter values of the output signal until it is within the predetermined parameter threshold range, whereby it may be determined that the alternating current electrical signal is able to output less power to the radiation energy source 21 during a cycle, which in turn may reduce the frequency of light radiated by the radiation energy source 21 to within the predetermined frequency range.

In other embodiments, the signal sent by sampling unit 14 to main control circuit 11 may also only contains the electrical parameter values obtained from the sampling. After receiving the signal, the main control circuit 11 compares the electrical parameter values with the predetermined parameter threshold range to determine whether an adjustment of the control signal is required, and the manner in which the adjustment of the control signal is to be made, e.g., increasing or decreasing the percentage of the zero-amplitude portion.

In summary, in some embodiments, the power of the output signal is adjusted by varying the percentage of zero-amplitude portion in the control signal to adjust the power of the output signal when the main control circuit 11 is adjusted to the control signal, which in turn causes the electrical parameter values of the adjusted output signal to be within the predetermined parameter threshold range.

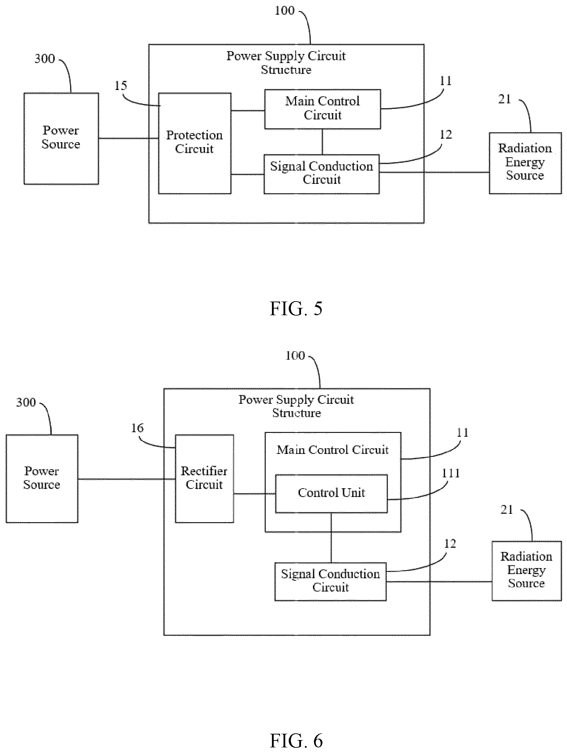

Referring to FIG. 5, the power supply circuit structure 100 comprises a protection circuit 15. The main control circuit 11 connects to the power source 300 via the protection circuit 15, and in the event of an abnormality in the power source 300, the protection circuit 15 is configured to cut off the power source 300, i.e., to disconnect the connection between the power source 300 and the main control circuit 11 in order to provide protection for the power supply circuit structure 100.

Specifically, in an embodiment shown in FIG. 5, the power source 300 is connected to the power supply circuit structure 100 via the protection circuit 15, and in the event of an abnormality of the power source 300 (e.g., the voltage amplitude is outside of the rated amplitude), the main control circuit 11 may be prevented from damaging the main control circuit 11 in the event of the abnormality of the power source 300 through the protection circuit 15, which may enable the protection circuit 15 to disconnect the connection between the main control circuit 11 and the power source 300, avoiding main control circuit 11 from affecting the input power of radiation energy source 21 due to unstable power supply, as well as preventing damage to the components of power supply circuit structure 100, improving the safety of power supply circuit structure 100. In more specific embodiments, protection circuit 15 may include a structure such as an air safety switch, fuse, fuse, etc., which is directly disconnected in case of excessive power.

Referring to FIG. 6, the power supply circuit structure 100 comprises a rectifier circuit 16. The main control circuit 11 comprises a control unit 111, rectifier circuit 16 is connected between the control unit 111 and the power source 300, and the rectifier circuit 16 receives the alternating current electrical signal and outputs a direct current electrical signal having a predetermined amplitude to power the control unit 111.

Specifically, in the embodiment shown in FIG. 6, the periodically varying alternating current electrical signal output from the power source 300 may be rectified by the rectifier circuit 16 so as to convert the alternating current electrical signal into a direct current electrical signal, and the output direct current electrical signal may be configured to supply power to the control unit 111. In an embodiment, the direct current electrical signal is a voltage signal and the preset amplitude is a voltage amplitude of the direct current electrical signal. Alternatively, the preset amplitude of the direct current electrical signal may be determined on a case-by-case basis or may be calibrated by actual testing. In another embodiment, the preset amplitude of the direct current electrical signal obtained by the conversion of rectifier circuit 16 may be 3.3V.

In addition, in some embodiments, a voltage regulating circuit may also be connected between the rectifier circuit 16 and the control unit 111, so that the DC signal may be regulated by the voltage regulating circuit, thereby causing the regulated DC signal to be output to the control unit 111 to power the control unit 111.

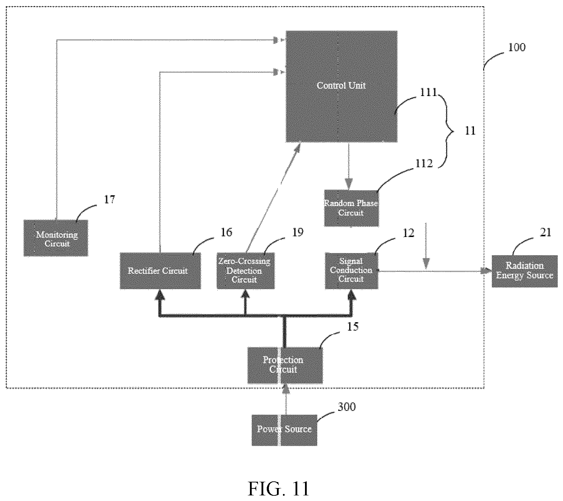

The control unit 111, as an electrical component with data processing capability, is sensitive to the supply signal and needs to supply power to the alternating current electrical signal after rectifying and regulating it, so a special rectifier circuit 16 is set up. In other words, after alternating current electrical signal enters into the power supply circuit structure 100, it is divided into at least two circuits (which can be shown in FIG. 11), where one of the routes enters into the rectifier circuit 16, and is rectified and/or regulates the voltage after which power is supplied to control unit 111, and the other way enters signal conduction circuit 12, which adjusts the alternating current electrical signal being channeled into that path based on the control signal sent by control unit 111, and the resulting output signal supplies power to radiation energy source 21.

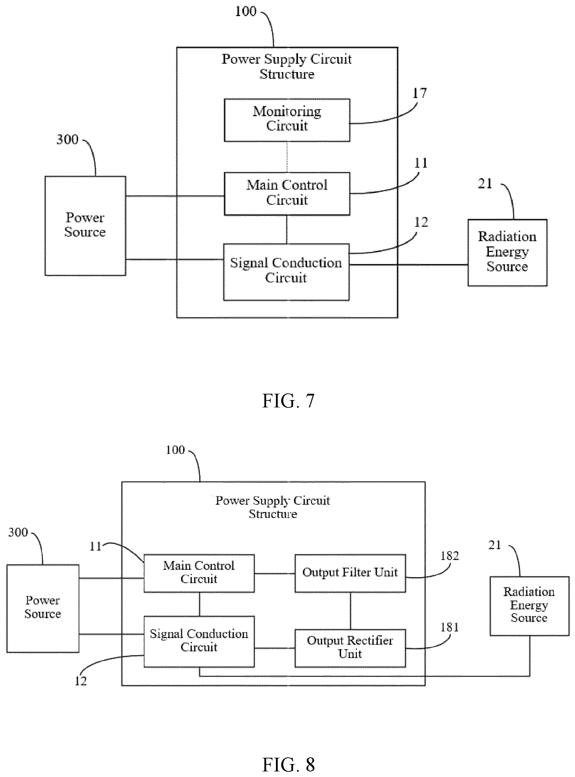

Referring to FIG. 7, the power supply circuit structure 100 comprise a monitoring circuit 17. The monitoring circuit 17 connects to the main control circuit 11, and the monitoring circuit 17 is configured to monitor the amplitude of the alternating current electrical signal. The main control circuit 11 receives the amplitude of the alternating current electrical signal and adjusts the control signal. In a more specific embodiment, the monitoring circuit 17 may be directly connected to the power source 300 and detects the amplitude of the alternating current electrical signal or it may detect the alternating current electrical signal by communicating with the main control circuit 11 and detecting the magnitude of the alternating current electrical signal.

In this way, the alternating current electrical signal can be adjusted in a timely manner if an abnormality occurs in the alternating current electrical signal.

Specifically, in an embodiment, monitoring circuit 17 may monitor the amplitude of the alternating current electrical signal, and may inform the main control circuit 11 when the amplitude of the alternating current electrical signal changes, causing main control circuit 11 to adjust the control signal based on the current amplitude of the alternating current electrical signal. In some such embodiments, when the amplitude of the alternating current increases, then main control circuit 11 corresponds to increase the percentage of zero-amplitude portion in the control signal to decrease the power of the output signal, and when the amplitude of the alternating current decreases, then main control circuit 11 corresponds to decrease the percentage of zero-amplitude portion in the control signal to increase the power of the output signal. In an embodiment, the amplitude of alternating current electrical signal is 220V and the range of variation of alternating current electrical signal is [-20%,20%].

Referring to FIG. 8, the power supply circuit structure 100 comprises an output rectifier unit 181 and an output filter unit 182. The output rectifier unit 181 connects to the output filter unit 182, the output rectifier unit 181 is configured to rectify the output signal to obtain an output rectified signal, and output filter unit 182 is configured to filter the output rectified signal to obtain an output filtered signal, the power of the output filtered signal reflects the power of output signal, and there exists a certain mathematical relationship between the two, the certain mathematical relationship is determined by the actual circuit design, in the output filtered signal power does not meet the preset condition, it can be seen that the power of output rectified signal can not satisfy the input power requirements of the radiation energy source 21 too, the main control circuit 11 is configured to adjust the control signal, in order to make the adjustment of the power of the output filtered signal to meet the preset condition, that is, it corresponds to the power of the output signal meeting the input power need of the radiation energy source 21.

In this way, the input power to radiation energy source 21 can be avoided due to the lack of stability of the power of output signal.

Specifically, in the embodiment shown in FIG. 8, the signal conduction circuit 12 is connected to the output rectifier unit 181, and when the output signal is generated by the signal conduction circuit 12, the output rectifier unit 181 and the radiation energy source 21 are synchronized to input the output signal, enabling the output filter unit 182 to be synchronized to obtain the output filtered signal for synchronized detection of the output signal input to the radiation energy source 21. The rectification by output rectifier unit 181 and the filtering by output filter unit 182 may facilitate the subsequent processing of the output signal.

In some embodiments, in the event that the power of the output filtered signal obtained by filtering through output filter unit 182 is able to satisfy the preset condition, it is determined that the current output signal is able to radiate light within the predetermined frequency range when supplied to the radiation energy source 21. Whereas, in the case where the power of the output filtered signal obtained by filtering through the output filter unit 182 is too high or too low, it is determined that the power of the output signal is also correspondingly too high or too low, i.e., the current output signal is unable to radiate light within the predetermined frequency range after being supplied to the radiation energy source 21, and that if power is supplied to the radiation energy source 21 it is prone to make the frequency of light radiated by the radiation energy source 21 outside the predetermined frequency range.

In an embodiment, an output adjustment signal may be sent to the main control circuit 11 by the output filter unit 182. The main control circuit 11 upon receiving the output adjustment signal sent by output filter unit 182, may determine whether the power of the output signal is higher or lower based on the output adjustment signal. In determining that the power of the output signal is higher, the percentage of zero-amplitude portion in the control signal may be increased, enabling the alternating current electrical signal to output less power to the radiation energy source 21 during a cycle, which may reduce the input power, which may in turn ensure that the frequency of light radiated by the radiation energy source 21 is reduced until it returns to the predetermined frequency range. In determining that the power of the output signal is lower, the percentage of zero-amplitude portion in the control signal may be decreased, enabling the alternating current electrical signal to output less power to the radiation energy source 21 during a cycle, which may reduce the input power, which in turn ensures that the radiation energy source 21 radiates a reduced frequency of light until it returns to the predetermined frequency range.

In addition, in other embodiments, the power supply circuit structure 100 may also regulate the voltage of the output filtered signal, which may make the voltage of the output filtered signal more stable, thereby enabling a more accurate power detection thereof.

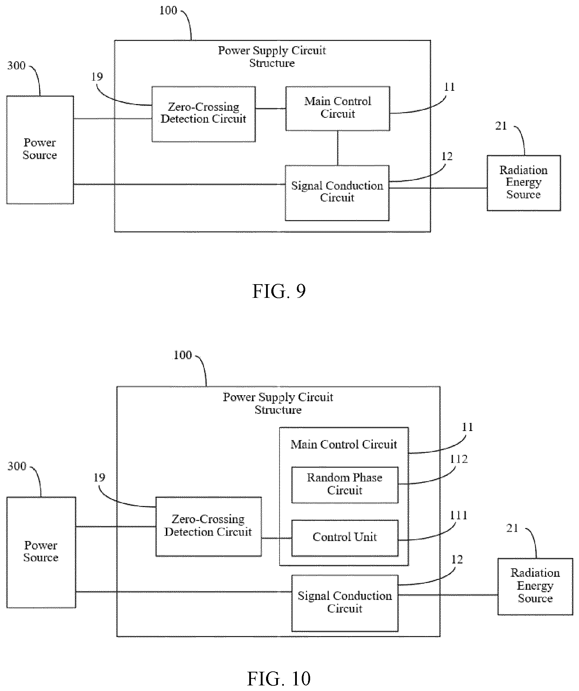

Referring to FIG. 9, main control circuit 11 comprises a zero-crossing detection circuit 19, which is configured to generate a zero-crossing detection signal based on the zero-crossing moments of the alternating current electrical signal when being supplied to the alternating current electrical signal, and the main control circuit 11 receives the zero-crossing detection signal and determines the zero-crossing moments of the control signal based on the zero-crossing detection signal.

In this way, the starting moment of each cycle of the control signal can be easily determined.

Specifically, in the embodiment shown in FIG. 9, the zero-crossing detection circuit 19 is connected between the main control circuit 11 and the power source 300. When the power source 300 supplies the alternating current signal to the zero-crossing detection circuit 19 , the zero-crossing detection circuit 19 can generate the zero-crossing detection signal, which is a square wave signal that starts from the zero-crossing moments of the zero-crossing detection signal and lasts for a predetermined length of time. When the main control circuit 11 receives the zero-crossing detection signal, it determines the starting moment of each cycle of the control signal based on the square wave signal in the zero-crossing detection signal to ensure that the control signal can be synchronized with the alternating current signal so as to be able to generate an output signal based on the alternating current signal, the control signal which is kept in synchronization, and the three of them maintain the same phase. In an embodiment, the predetermined duration is less than half of the period of the alternating current electrical signal.

In a specific embodiment, the zero-amplitude portion within each cycle of the control signal also starts at the zero-crossing moments, i.e. the zero-crossing detection signal is simultaneously referenced as the starting moment of the zero-amplitude portion. Since both zero-amplitude portion and the zero-crossing moments are of zero amplitude in the waveform, using the zero-crossing moments as the starting moment of zero-amplitude portion enables continuity of the portion of the control signal within which the amplitude is zero.

In other embodiments, it is also possible to introduce a delay after the preset time from the zero-crossing moments, considering it as the starting point of the zero-amplitude portion.

Referring to FIG. 10, in some embodiments, the main control circuit 11 comprises a control unit 111 and a random phase circuit 112, the control unit 111 is connected to the zero-crossing detection circuit 19. The random phase circuit 112 is connected between the control unit 111 and the signal conduction circuit 12. The control unit 111 generates a power control signal based on the magnitude of the alternating current electrical signal, the predetermined frequency range and the zero-crossing detection signal. The random phase circuit 112 generates the control signal based on the power control signal and determines the zero-crossing moments of the control signal based on the zero-crossing detection signal.

In this way, the zero-crossing moments of the control signal can be synchronized with the zero-crossing moments of the alternating current electrical signal based on the zero-crossing detection signal, and is used as the starting time of the signal cycle.

Specifically, in the embodiment shown in FIG. 10, when the power source 300 supplies the alternating current electrical signal to the zero-crossing detection circuit 19, the zero-crossing detection circuit 19 generates a square wave signal at the zero-crossing moments of the alternating current electrical signal that will last for a predetermined length of time, outputting zero after the predetermined length of time has elapsed since zero-crossing moments in the alternating current electrical signal, thereby forming the zero-crossing detection signal. When the main control circuit 11 receives the zero-crossing detection signal, it determines the moments of zero-crossing of the alternating current electrical signal based on the amplitude of the alternating current electrical signal, the predetermined frequency range, and the zero-crossing detection signal, thereby generating the power control signal. When the random phase circuit 112 receives the power control signal, generates the control signal based on it, and determines the phase of the control signal based on the moments of zero-crossing of the alternating current electrical signal, to ensure that the control signal is synchronized with the starting time of the signal cycle of the alternating current electrical signal, thereby forming the adjusted control signal. The signal conduction circuit 12 determines the phase of the output signal based on the adjusted control signal. By utilizing the zero-crossing detection signal, the control signal references the moments of zero-crossing of the alternating current electrical signal, establishing the starting time of the signal cycle. Within a single cycle, the alternating current electrical signal and the control signal synchronize, ensuring phase synchronization, thereby achieving precise adjustment of the alternating current electrical signal to obtain the desired output signal.

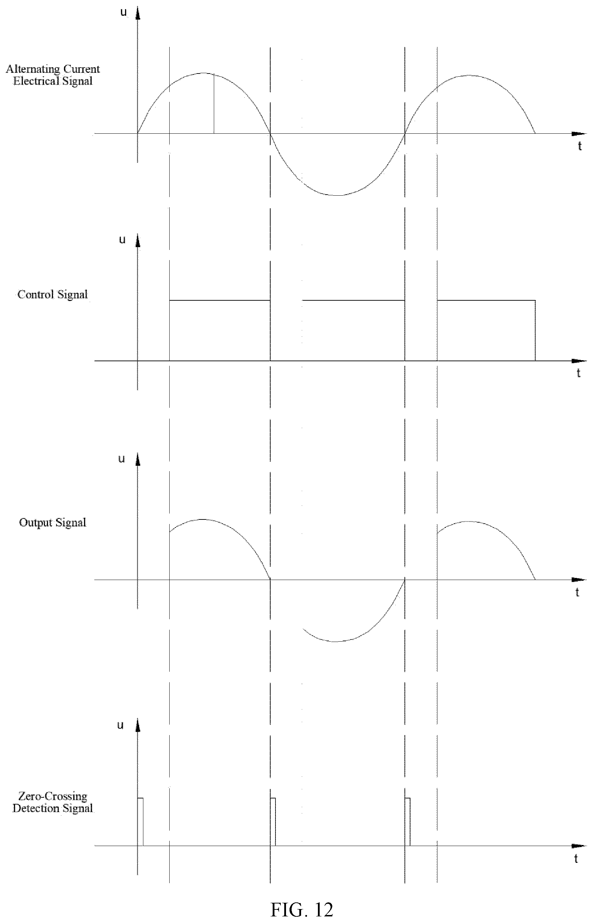

Also, referring to FIGS. 11 and 12, in the embodiment shown in FIG. 11, the alternating current electrical signal provided by the power source 300 as shown in FIG. 12 is a 220V alternating current, the protection circuit 15 is connected after the switch of the power source 300. The rectifier circuit 16, the zero-crossing detection circuit 19 and the signal conduction circuit 12 are all connected after the protection circuit 15. A voltage regulating circuit structure is connected after the rectifier circuit 16, and the electrical signal obtained by the rectifier circuit 16 is a direct current with a voltage value of 310V, and the voltage regulating circuit structure is capable of sequentially down-converting the direct current with a voltage value of 310V to 15V, 5V and 3.3V, so as to obtain a DC signal with a preset amplitude of 3.3V after voltage regulation, and supply power to the control unit 111 by means of the DC signal after voltage regulation. The monitoring circuit 17 is connected to the control unit 111 through a voltage divider resistor so that the amplitude of the alternating current electrical signal can be monitored through the control unit 111. The zero-crossing detection circuit 19, after being energized into the alternating current electrical signal, will output the zero-crossing detection signal to the control unit 111 as shown in FIG. 12, so that the control unit 111 determines the power control signal based on the alternating current electrical signal and the predetermined frequency range of the radiation energy source 21 , and sends the power control signal to the random phase circuit 112. Which after receiving the power control signal, the random phase circuit 112 generates the control signal as shown in FIG. 12, and the signal conduction circuit 12 generates the output control signal as shown in FIG. 12 based on the control signal and the alternating current electrical signal, and ultimately causing radiation energy source 21 to radiate the light of the predetermined frequency range after input the output signal.

In an embodiment, the protection circuit 15 may include an X-capacitor (differential mode interference suppression capacitor), a Y-capacitor (common mode interference suppression capacitor), a MOV (metal-oxide-varistor), and a Fuse (fuse).

In an embodiment, the signal conduction circuit 12 may include a lamp cup SCR such that the alternating current electrical signal may be controlled by the lamp cup SCR to conduct or disconnect based on the control signal.

In an embodiment, a fuse is connected between the signal conduction circuit 12 and the radiation energy source 21, so that when the power of the output signal is too high, the disconnection between the power supply circuit structure 100 and the radiation energy source 21 can be realized by the fuse blowing by itself, avoiding spontaneous combustion of objects caused by making the radiation energy source 21 overloaded and radiating a greater frequency of light to the surrounding objects.

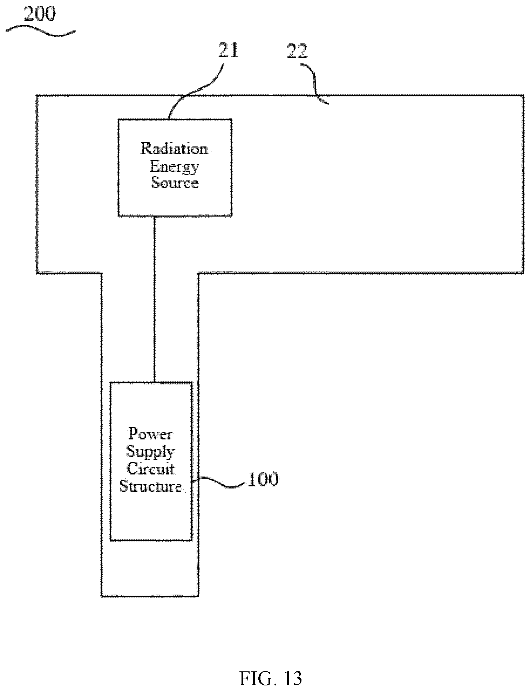

Referring to FIG. 13, an embodiment of the present disclosure provides an apparatus for drying an object 200 comprising a housing 22, a radiation energy source 21, and a power supply circuit structure 100 as described in any of the above embodiments, the radiation energy source 21 and the power supply circuit structure 100 being disposed within the housing 22, and the radiation energy source 21 being capable of connecting the power supply circuit structure 100.

The above apparatus for drying an object 200, the power supply circuit structure 100 regulates the power output of the alternating current electrical signal based on the predetermined frequency range of alternating current electrical signal and radiation energy source 21, and the zero-amplitude portion of the control signal is equivalent to truncating the power of the alternating current electrical signal in the interval, thus intercepting a part of the power from alternating current electrical signal to meet the power supply of radiation energy source 21, and thus achieves the effect of controlling the power of the power of the output signal can be precisely adjusted by adjusting the control signal to precisely adjust the power output to the radiation energy source 21, thus enabling the radiation energy source 21 to output the predetermined frequency range radiation light, and thus ensuring that the radiation energy source 21 can maintain a good drying effect.

It will be understood that the specific process and principle of powering the radiation energy source 21 by the power supply circuit structure 100 has been described in the foregoing embodiments, and will not be expanded upon herein to avoid repetition.

Also, in the embodiment shown in FIG. 13, the number of radiation energy source 21 is one, and it will be appreciated that in other embodiments, the apparatus for drying an object 200 may be provided with a plurality of radiation energy sources 21 as appropriate, and the plurality of radiation energy sources 21 is connected to the power supply circuit structure 100, such that the power supply circuit structure 100 may be power supply circuit structure 100 to supply power to the plurality of radiation energy sources 21. The apparatus for drying an object 200 may be a hair dryer.

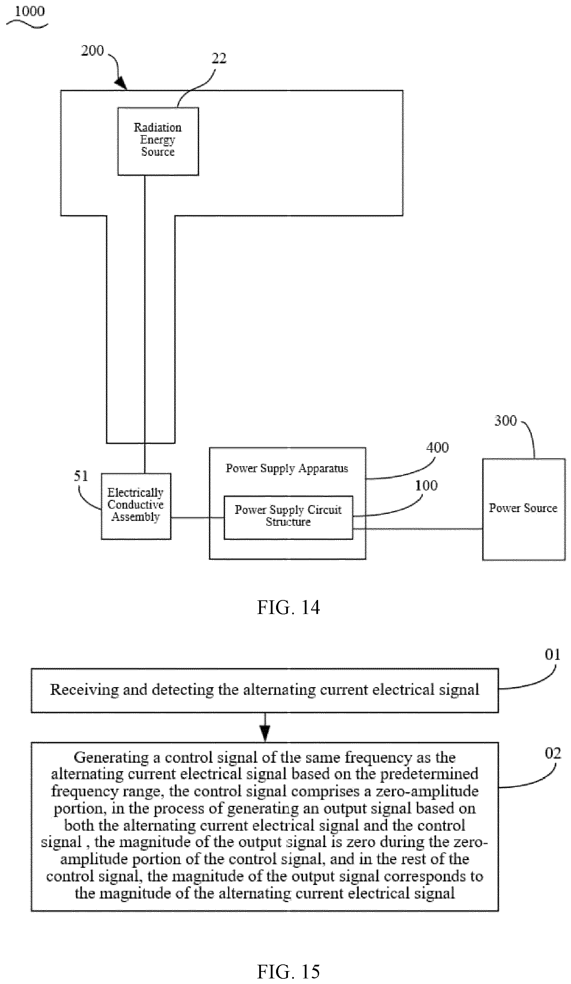

Referring to FIG. 14, an aspect of the present disclosure provides a power supply kit 1000, the power supply kit 1000 comprises a detachably connected apparatus for drying an object 200 and a power supply apparatus 400, with an electrically conductive assembly 51 provided at a connection between the apparatus for drying an object 200 and the power supply apparatus 400 to enable conduction of the power supply circuit structure 100 and the one or more radiation energy sources 21 when the apparatus for drying an object 200 and the power supply apparatus 400 are in a connected state, to enable the power supply circuit structure 100 to be able to supply power to the one or more radiation energy sources 21. The apparatus for drying an object 200 comprises one or more radiation energy sources 21, and power supply apparatus 400 comprises the power supply circuit structure 100 as described in any of the above embodiments. The power supply circuit structure 100 is connected to power supply apparatus 400 when apparatus for drying an object 200 is connected to power supply apparatus 400 by connecting to the power source 300 to be used for supplying power to the one or more radiation energy sources 21. The electrically conductive assembly 51 may be a plurality of contacts, plug-in connectors and plug interfaces, and other structures, the details of which are not the focus of this embodiment.

Specifically, the apparatus for drying an object 200 may be connected to the power supply apparatus 400, and when the power supply apparatus 400 is connected to the power source 300, the power supply to the radiation energy source 21 of the apparatus for drying an object 200 may be realized by the power supply circuit structure 100 of the power supply apparatus 400. And when the power supply apparatus 400 completes the power supply to the apparatus for drying an object 200, the apparatus for drying an object 200 can be detached from the power supply apparatus 400, which can be convenient for the placement and preservation of the apparatus for drying an object 200 or carrying it separately, so as not to need to set the power supply circuit structure 100 at the apparatus for drying an object 200 to avoid the overall structure of the apparatus for drying an object 200 being too large. The power supply apparatus 400 can be a power source adapter.

In the above power supply kit 1000, the power supply circuit structure 100 is able to regulate the power output of the alternating current electrical signal after obtaining the alternating current electrical signal and the predetermined frequency range of the radiation energy source 21, and the zero-amplitude portion of the control signal is equivalent to truncating the power of alternating current electrical signal in the interval, thus intercepting a part of the power of the alternating current electrical signal to meet the power supply of radiation energy source 21, and thus achieving the effect of controlling the power of the output signal. By adjusting the control signal can precisely adjust the power output to radiation energy source 21, in order to ensure better stability of the voltage of the radiation energy source 21, so as to ensure that the light radiated by the radiation energy source 21 is within the predetermined frequency range, and thus ensure that radiation energy source 21 can maintain good drying effect.

Also, in the aspect shown in FIG. 14, the number of radiation energy source 21 is one, and it will be understood that in other embodiments, the apparatus for drying an object 200 may be set up with a plurality of radiation energy sources 21 as appropriate, and the plurality of radiation energy sources 21 connects to the power supply circuit structure 100 such that the power supply circuit structure 100 may be power supply circuit structure 100 to supply power to the plurality of radiation energy sources 21.

The quantity of the drying apparatus 200 and the power supply apparatus 400 in the power supply kit can be configured in a one-to-one relationship or may exist in a one-to-many scenario.

The number of the apparatus for drying an object 200 and the power supply apparatus 400 in the power supply kit 1000 can be configured in a one-to-one relationship or may exist in a one-to-many relationship. In one specific embodiment, the number of the apparatus for drying an object 200 is a plurality, such as a hair dryer, hand dryer, tumble dryer, etc., sharing a single power supply apparatus 400, which is disassembled and used as needed to save costs. In another specific embodiment, for example, the apparatus for drying an object 200 is a hair dryer and the number of the power supply apparatus 400 is a plurality, the user places each power supply apparatus 400 at home, office, and gym, and when the apparatus for drying an object 200 needs to be used when located in a different place, the user only needs to carry the apparatus for drying an object 200 to the corresponding place, and install it to the power supply apparatus 400 set up in the corresponding place for use, which is easy to carry.

Referring to FIG. 1 and FIG. 15, the embodiment of the present disclosure provides a power supply method for a power supply circuit structure 100, the power supply circuit structure 100 for connecting a the power source 300 to power one or more radiation energy sources 21, the power source 300 providing a periodically varying alternating current electrical signal, and the one or more radiation energy sources 21 are capable of radiating light of predetermined frequency range, the power supply method comprises:
01: Receiving and detecting the alternating current electrical signal;
02: Generating a control signal of the same frequency as the alternating current electrical signal based on the predetermined frequency range, the control signal comprises a zero-amplitude portion, in the process of generating an output signal based on both the alternating current electrical signal and the control signal , the magnitude of the output signal is zero during the zero-amplitude portion of the control signal, and in the rest of the control signal, the magnitude of the output signal corresponds to the magnitude of the alternating current electrical signal.

The power supply method of the present disclosure embodiments may be realized by the power supply circuit structure 100 of the present disclosure embodiments. Specifically, with reference to FIG. 1, the power supply circuit structure 100 comprises the main control circuit 11, wherein the main control circuit 11 is configured to: receiving and detecting the alternating current electrical signal, generating a control signal of the same frequency as the alternating current electrical signal based on the predetermined frequency range, the control signal comprises a zero-amplitude portion, in the process of generating an output signal based on both the alternating current electrical signal and the control signal , the magnitude of the output signal is zero during the zero-amplitude portion of the control signal, and in the rest of the control signal, the magnitude of the output signal corresponds to the magnitude of the alternating current electrical signal.

The above power supply method, by varying the percentage of zero-amplitude portion in the control signal, the power output from power supply circuit structure 100 to radiation energy source 21 can be precisely adjust, thereby enabling the radiation energy source 21 to emit radiation within the predetermined frequency range, and thus ensuring a good heating and drying effect of the one or more radiation energy sources 21.

Specifically, in the embodiment shown in FIG. 1, the output signal can be generated by signal conduction circuit 12, that is, the power supply circuit structure 100 receives the alternating current electrical signal and the control signal through the signal conduction circuit 12, which enables the generation of the output signal. Wherein the amplitude of the output signal corresponding to the control signal zero-amplitude portion is also zero, the amplitude of the output signal corresponding to the other portions of the control signal will correspond to the amplitude of the alternating current electrical signal. Thus, the amplitude variation of the output signal can be controlled through the control signal, allowing for the adjustment of the power of the output signal.

It is understood that the specific embodiment of power supply circuit structure 100 to generate the output signal based on the alternating current electrical signal has been described in the foregoing embodiment, and the specific principles of the subsequent embodiment can all be referred to the foregoing embodiment, so it will not be expanded in detail here.

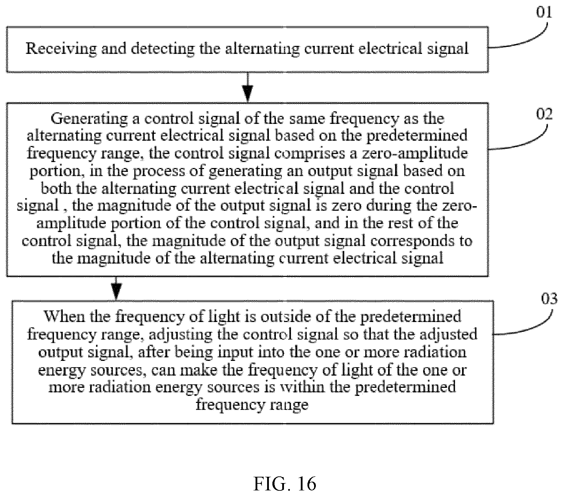

Referring to FIG. 3 and FIG. 16, in some embodiments, power supply circuit structure 100 comprises a light sensor 13. The light sensor 13 being configured to detect the frequency of light of the one or more radiation energy sources 21, the power supply method further comprising:
03: When the frequency of light is outside of the predetermined frequency range, adjusting the control signal so that the adjusted output signal, after being input into the one or more radiation energy sources, can make the frequency of light of the one or more radiation energy sources is within the predetermined frequency range.

The power supply method of this application embodiment can be realized by the power supply circuit structure 100 of this application embodiment. Specifically, in conjunction with FIG. **1****,** the main control circuit 11 is configured to: adjusting the control signal so that the adjusted output signal, after being input into the one or more radiation energy sources 21, can make the frequency of light of the one or more radiation energy sources 21 is within the predetermined frequency range.

In this way, the input power of radiation energy source 21, i.e., the power of the output signal generated by signal conduction circuit 12, can be adjusted by feedback from the frequency of light actually radiated by the one or more radiation energy sources 21.

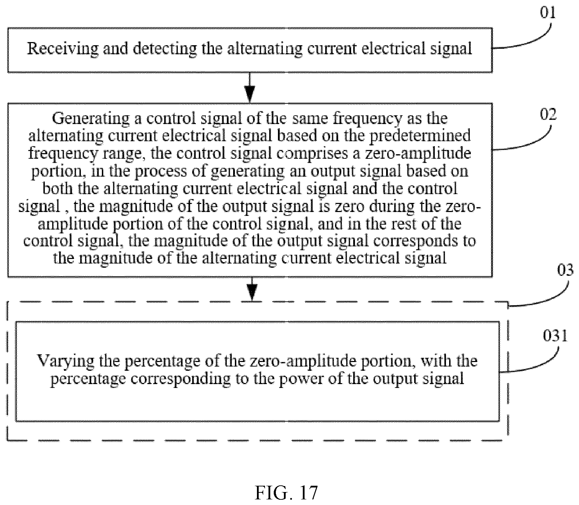

Referring to FIG. 17, in some embodiments, wherein when the frequency of light is outside of the predetermined frequency range, adjusting the control signal so that the adjusted output signal, after being input into the one or more radiation energy sources, can make the frequency of light of the one or more radiation energy sources 21 is within the predetermined frequency range, comprises:
031: Varying the percentage of the zero-amplitude portion, with the percentage corresponding to the power of the output signal.

It is readily understood that the zero-amplitude portion refers to the segment of the output signal in each cycle where the power is zero, and its proportion is inversely proportional to the power of the output signal, and thus the correspondence between the percentage and the power of the output signal is as follows: the higher the percentage, the smaller the power of the output signal, and vice versa, the lower the percentage, the bigger the power of the output signal, and the correspondence between the percentage and the power of the output signal is hereinafter construed accordingly. In addition, no other duty ratio is involved in the present disclosure embodiment, and therefore the duty ratios described hereinafter all refer to the duty ratio of zero-amplitude portion in each cycle of the control signal.

The power supply method of this application embodiment can be realized by the power supply circuit structure 100 of this application embodiment. Specifically, in conjunction with FIG. 1, the main control circuit 11 is configured to: varying the percentage of the zero-amplitude portion, with the percentage corresponding to the power of the output signal.

In this way, the power of the output signal can be adjusted correspondingly to varying the percentage of zero-amplitude portion in the control signal.

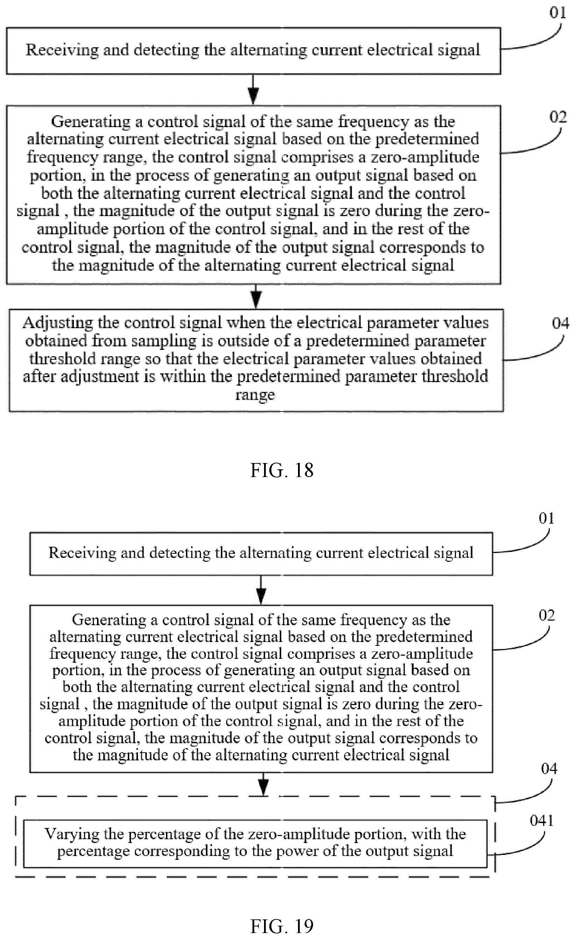

Referring to FIGS. 4 and 18, in some embodiments, the power supply circuit structure 100 comprises a sampling unit 14, the sampling unit 14 being configured to sample the electrical parameter values of the output signal, the method further comprising:
04: Adjusting the control signal when the electrical parameter values obtained from sampling is outside of a predetermined parameter threshold range so that the electrical parameter values obtained after adjustment is within the predetermined parameter threshold range.

The power supply method of the present disclosure embodiment can be realized by the power supply circuit structure 100 of the present disclosure embodiment. Specifically, in connection with FIG. 1, the main control circuit 11 is configured to: adjusting the control signal when the electrical parameter values obtained from sampling is outside of a predetermined parameter threshold range so that the electrical parameter values obtained after adjustment is within the predetermined parameter threshold range.

In this way, the input power of radiation energy source 21 can be adjusted by electrical parameter values feedback from output signal.

Referring to FIG. 19, in some embodiments, adjusting the control signal when the electrical parameter values obtained from sampling is outside of a predetermined parameter threshold range so that the electrical parameter values obtained after adjustment is within the predetermined parameter threshold range, comprising:
041: Varying the percentage of the zero-amplitude portion, with the percentage corresponding to the power of the output signal.

The power supply method of this application embodiment can be realized by the power supply circuit structure 100 of this application embodiment. Specifically, in conjunction with FIG. 1, the main control circuit 11 is configured to: varying the percentage of the zero-amplitude portion, with the percentage corresponding to the power of the output signal.

In this way, the power of the output signal can be adjusted correspondingly to varying the percentage of zero-amplitude portion in the control signal.

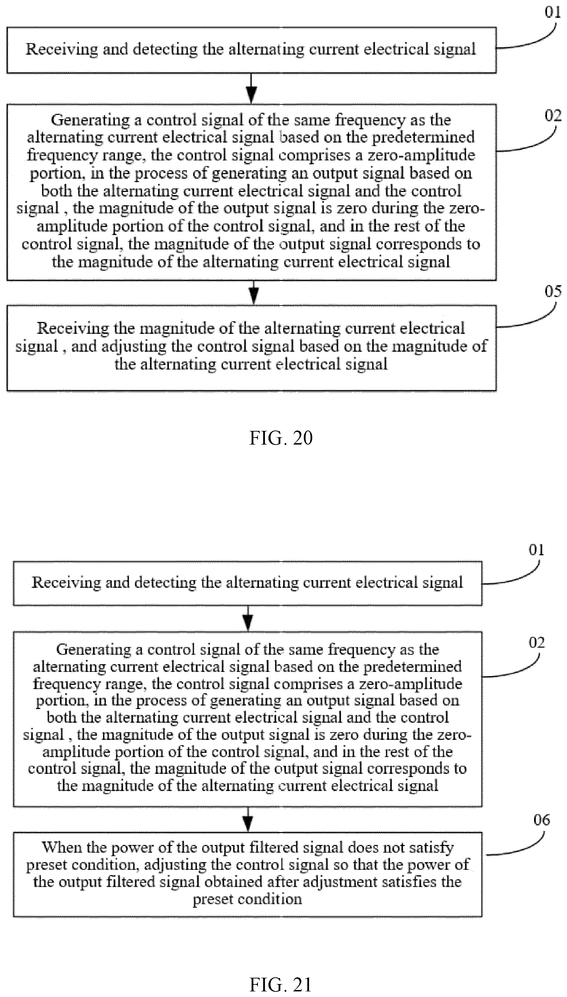

Referring to FIGS. 7 and 20, in some embodiments, power supply circuit structure 100 comprises a monitoring circuit 17, the monitoring circuit 17 is configured to monitor the magnitude of the alternating current electrical signal, the method further comprising:
05: Receiving the magnitude of the alternating current electrical signal , and adjusting the control signal based on the magnitude of the alternating current electrical signal.

The power supply method of the present disclosure embodiment can be realized by the power supply circuit structure 100 of the present disclosure embodiment. Specifically, in connection with FIG. 1, the main control circuit 11 is configured to: receiving the magnitude of the alternating current electrical signal , and adjusting the control signal based on the magnitude of the alternating current electrical signal.

In this way, the alternating current electrical signal can be adjusted in a timely manner when an abnormality occurs in alternating current electrical signal.

Referring to FIGS. 8 and 21, in some embodiments, power supply circuit structure 100 comprises an output rectifier unit 181 and an output filter unit 182 , the output rectifier unit 181 is connected to the output filter unit 182, the output rectifier unit 182 is configured to rectify the output signal in order to obtain an output rectified signal, the output filter unit 182 is configured to filter the output rectified signal in order to obtain an output filtered signal, the method further comprising:
06: When the power of the output filtered signal does not satisfy preset condition, adjusting the control signal so that the power of the output filtered signal obtained after adjustment satisfies the preset condition.

The power supply method of the present disclosure embodiment can be realized by the power supply circuit structure 100 of the present disclosure embodiment. Specifically, in connection with FIG. 1, the main control circuit 11 is configured to: when the power of the output filtered signal does not satisfy preset condition, adjusting the control signal so that the power of the output filtered signal obtained after adjustment satisfies the preset condition.

In this way, the input power to radiation energy source 21 can be avoided due to the lack of stability of the power of output signal.

In some embodiments, the light located within the predetermined frequency range is infrared light.

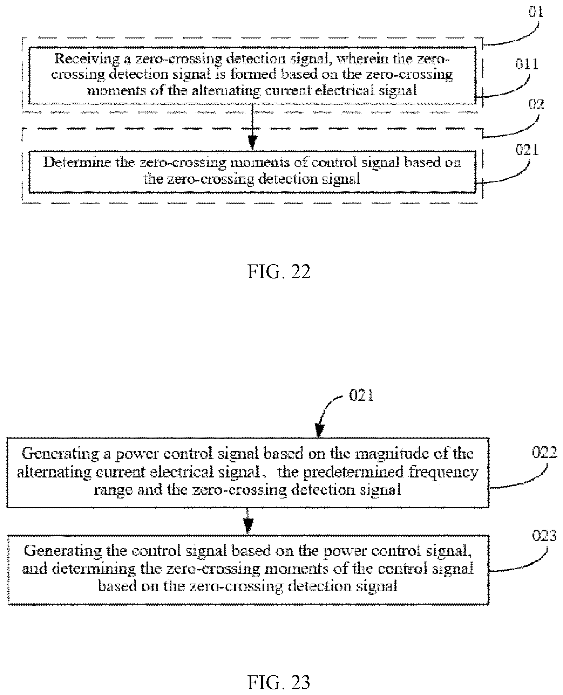

Referring to FIGS. 9 and 22, in some embodiments, receiving and detecting the alternating current electrical signal, comprising:
011: Receiving a zero-crossing detection signal, wherein the zero-crossing detection signal is formed based on the zero-crossing moments of the alternating current electrical signal.

Generating the control signal of the same frequency as the alternating current electrical signal based on the predetermined frequency range, comprising:
021: Determining the zero-crossing moments of the control signal based on the zero-crossing detection signal.

The power supply method of this application embodiment may be realized by the power supply circuit structure 100 of this application embodiment. Specifically, in connection with FIG. 9, the main control circuit 11 is configured to: receiving a zero-crossing detection signal, wherein the zero-crossing detection signal is formed based on the zero-crossing moments of the alternating current electrical signal; determining the zero-crossing moments of the control signal based on the zero-crossing detection signal.

In this way, the starting moment of each cycle in the control signal can be easily determined.

In the embodiment shown in FIG. 9, the main control circuit 11 further comprises a zero-crossing detection circuit 19, the zero-crossing detection circuit 19 is connected between the main control circuit 11 and the power source 300. When the alternating current electrical signal is input, the zero-crossing detection circuit 19 is configured to generate a zero-crossing detection signal based on the zero-crossing moments of the alternating current electrical signal.

Specifically, when the power supply 300 inputs the alternating current electrical signal into the zero-crossing detection circuit 19, the zero-crossing detection circuit 19 can generate a square wave signal at the zero-crossing moments of the alternating current electrical signal that will last for a predetermined length of time. Upon receiving the zero-crossing detection signal, the main control circuit 11 adjusts the starting time of each cycle of the control signal based on the square wave signal in the zero-crossing detection signal. This ensures synchronization between the control signal and the alternating current electrical signal, allowing the generation of an output signal based on the synchronized alternating current signal and control signal, maintaining the same phase among the three. In one embodiment, the predetermined duration is less than half of the period of the alternating current electrical signal.

In a specific embodiment, the zero-amplitude portion within each cycle of the control signal also starts at the zero-crossing moments, i.e. zero-crossing detection signal is simultaneously referenced as the starting moment of the zero-amplitude portion. Since both zero-amplitude portion and the zero-crossing moments are of zero amplitude in the waveform, using the zero-crossing moments as the starting moment of zero-amplitude portion enables continuity of the portion of the control signal within which the amplitude is zero.

In other embodiments, it is also possible to introduce a delay after the preset time from the zero-crossing moments, considering it as the starting point of the zero-amplitude portion.

Referring to FIGS. 10 and 23, in some embodiments, determining the zero-crossing moments of the control signal based on the zero-crossing detection signal:
022: Generating a power control signal based on the magnitude of the alternating current electrical signal, the predetermined frequency range and the zero-crossing detection signal;
023: Generating the control signal based on the power control signal, and determining the zero-crossing moments of the control signal based on the zero-crossing detection signal.

The power supply method of this application embodiment can be realized by the power supply circuit structure 100 of this application embodiment. Specifically, in connection with FIG. 9, the main control circuit 11 is configured to: generating the control signal based on the power control signal, and determining the zero-crossing moments of the control signal based on the zero-crossing detection signal.

In this way, it can be realized that the amplitude in the control signal corresponding to the moment of the alternating current electrical signal is adjusted to zero based on zero-crossing detection signal and is used as the starting time of the signal cycle.

Specifically, in the embodiment shown in FIG. 10, the main control circuit 11 comprises a control unit 111 and a random phase circuit 112, and when the power supply 300 outputs the alternating current electrical signal into the zero-crossing detection circuit 19, when the power source 300 supplies the alternating current electrical signal to the zero-crossing detection circuit 19, the zero-crossing detection circuit 19 generates a square wave signal at the zero-crossing moments of the alternating current electrical signal that will last for a predetermined length of time, outputting zero after the predetermined length of time has elapsed since zero-crossing moments in the alternating current electrical signal, thereby forming the zero-crossing detection signal. thereby enabling the main control circuit 11, when receiving the zero-crossing detection signal, to determine the moment at which the alternating current electrical signal passes over zero based on the amplitude of the alternating current electrical signal, the preset frequency band, and the square wave signal in the zero-crossing detection signal that can last for the preset length of time, thereby generating the power control signal. When the random phase circuit 112 receives the power control signal, generates the control signal based on it, and determines the phase of the control signal based on the moments of zero-crossing of the alternating current electrical signal, to ensure that the control signal is synchronized with the starting time of the signal cycle of the alternating current electrical signal, thereby forming the adjusted control signal. The signal conduction circuit 12 determines the phase of the output signal based on the adjusted control signal. By utilizing the zero-crossing detection signal, the control signal references the moments of zero-crossing of the alternating current electrical signal, establishing the starting time of the signal cycle. Within a single cycle, the alternating current electrical signal and the control signal synchronize, ensuring phase synchronization, thereby achieving precise adjustment of the alternating current electrical signal to obtain the desired output signal.

In the description of this specification, reference to the terms "certain embodiments", "an embodiment", "some embodiments", "schematic embodiments", "examples", "specific examples", or "some examples" is intended to refer to embodiments or examples described in conjunction with said embodiments or examples. embodiments", "examples", "specific examples", or "some examples" means that a specific feature, structure, material, or characteristic described in conjunction with said embodiments or examples is described. Specific features, structures, materials, or characteristics described in connection with the described embodiments or examples are included in at least an embodiment or example of the present disclosure. In this specification, schematic expressions of the above terms do not necessarily refer to the same embodiments or examples.

## Claims

1. A drying apparatus (200) comprising:
a housing (22);
one or more radiation energy sources (21); and
a power supply circuit structure (100), for connecting a power source (300) and supplying power to the one or more radiation energy sources (21), wherein the one or more radiation energy sources (21) are capable of connecting the power supply circuit structure (100);
wherein the one or more radiation energy sources (21) and the power supply circuit structure (100) are arranged within the housing (22);
wherein the power source (300) provides a periodically varying alternating current electrical signal, the one or more radiation energy sources (21) are capable of radiating light of a predetermined frequency range of infrared light, the power supply circuit structure (100) comprises:
- a main control circuit (11), configured to receive and detect the alternating current electrical signal, generate a control signal, wherein the control signal comprises a zero-amplitude portion; and
- a signal conduction circuit (12), configured to receive the alternating current electrical signal and the control signal, and generate an output signal, wherein the magnitude of the output signal is zero in the zero-amplitude portion of the control signal, and in the rest of the control signal, the magnitude of the output signal corresponds to the magnitude of the alternating current electrical signal;
wherein the main control circuit (11) is configured to vary the percentage of the zero-amplitude portion, and the signal conduction circuit (12) is configured to correspondingly adjust the power of the output signal;
wherein the drying apparatus (200) is configured to pass the output signal to the one or more radiation energy sources (21) to adjust the power output from the power supply circuit structure (100) to the one or more radiation energy sources (21), such that the one or more radiation energy sources (21) are configured to radiate light within the predetermined frequency range of infrared light;
wherein the main control circuit (11) further comprises a zero-crossing detection circuit (19), when the alternating current electrical signal is input, the zero-crossing detection circuit (19) is configured to generate a zero-crossing detection signal based on the zero-crossing moments of the alternating current electrical signal, and the main control circuit (11) receives the zero-crossing detection signal and determines the zero-crossing moments of the control signal based on the zero-crossing detection signal;
wherein the power supply circuit structure (100) further comprises a sampling unit (14), configured to sample an electrical parameter value of the output signal, and the main control circuit (11) adjusts the control signal when the electrical parameter value obtained from sampling is outside of a predetermined parameter threshold range so that the electrical parameter value obtained after adjustment is within the predetermined parameter threshold range, wherein the electrical parameter value is a voltage value or a current value or a power of the output signal.

2. The drying apparatus (200) of claim 1, wherein the power supply circuit structure (100) further comprises a light sensor (13), configured to detect the frequency of light of the one or more radiation energy sources (21), and when the frequency of light is outside of the predetermined frequency range of infrared light, the main control circuit (11) adjusts the control signal so that the adjusted output signal, after being input into the one or more radiation energy sources (21), capable of making the frequency of light of the one or more radiation energy sources (21) within the predetermined frequency range of infrared light.

3. The drying apparatus (200) of claim 1, wherein the main control circuit (11) is configured to vary the percentage of the zero-amplitude portion, and the signal conduction circuit (12) is configured to correspondingly adjust the power of the output signal, which in turn causes the electrical parameter value of the output signal to reach a preset electrical parameter value.

4. The drying apparatus (200) of claim 1, wherein the power supply circuit structure (100) comprises a rectifier circuit (16), the main control circuit (11) comprises a control unit (111), the rectifier circuit (16) is connected between the control unit (111) and the power source (300), and the rectifier circuit (16) receives the alternating current electrical signal and outputs a direct current electrical signal having a predetermined amplitude to power the control unit (111),
or wherein
the power supply circuit structure (100) further comprises a monitoring circuit (17), configured to monitor the magnitude of the alternating current electrical signal, and the main control circuit (11) receives the magnitude and adjusts the control signal,
or wherein
the power supply circuit structure (100) further comprises an output rectifier unit (181) and an output filter unit (182), wherein the output rectifier unit (181) is connected to the output filter unit (182), the output rectifier unit (181) is configured to rectify the output signal in order to obtain an output rectified signal, the output filter unit (182) is configured to filter the output rectified signal in order to obtain an output filtered signal, when the power of the output filtered signal does not satisfy preset condition, the main control circuit (11) adjusts the control signal so that the power of the output filtered signal obtained after adjustment satisfies the preset condition.

5. The drying apparatus (200) of claim 1, wherein the main control circuit (11) further comprises:
a control unit (111), connected to the zero-crossing detection circuit (19), wherein the control unit (111) generates a power control signal based on the magnitude of the alternating current electrical signal, the predetermined frequency range of infrared light and the zero-crossing detection signal;
a random phase circuit (112), connected between the control unit (111) and the signal conduction circuit (12), wherein the random phase circuit (112) is configured to generate the control signal based on the power control signal and determine the zero-crossing moments of the control signal based on the zero-crossing detection signal.

6. A method of supplying power for a power supply circuit structure (100), the power supply circuit structure (100) for connecting a power source (300) and supplying power to one or more radiation energy sources (21), the power source (300) providing a periodically varying alternating current electrical signal, the one or more radiation energy sources (21) capable of radiating light of a predetermined frequency range of infrared light, wherein the power supply circuit structure (100) further comprises a sampling unit (14), configured to sample an electrical parameter value of the output signal, wherein the method comprises:
receiving and detecting the alternating current electrical signal;
generating a control signal, wherein the control signal comprises a zero-amplitude portion, in the process of generating an output signal based on both the alternating current electrical signal and the control signal, the magnitude of the output signal is zero during the zero-amplitude portion of the control signal, and in the rest of the control signal, the magnitude of the output signal corresponds to the magnitude of the alternating current electrical signal;
adjusting the control signal when the electrical parameter value obtained from sampling is outside of a predetermined parameter threshold range so that the electrical parameter value obtained after adjustment is within the predetermined parameter threshold range, wherein the electrical parameter value is a voltage value or a current value or a power of the output signal; and
passing the output signal to the one or more radiation energy sources (21) to adjust the power output from the power supply circuit structure (100) to the one or more radiation energy sources (21), such that the one or more radiation energy sources (21) are configured to radiate light within the predetermined frequency range of infrared light;
wherein receiving and detecting the alternating current electrical signal comprises:
- receiving a zero-crossing detection signal, wherein the zero-crossing detection signal is formed based on the zero-crossing moments of the alternating current electrical signal; and
- generating the control signal, comprising: determining the zero-crossing moments of the control signal based on the zero-crossing detection signal; and
wherein adjusting the control signal when the electrical parameter value obtained from sampling is outside of a predetermined parameter threshold range so that the electrical parameter value obtained after adjustment is within the predetermined parameter threshold range comprises varying the percentage of the zero-amplitude portion, with the percentage corresponding to the power of the output signal.

7. The method of claim 6, wherein the power supply circuit structure (100) further comprises a light sensor (13), the light sensor (13) for detecting frequency of light of the one or more radiation energy sources (21), the method further comprising:
when the frequency of light is outside of the predetermined frequency range of infrared light, adjusting the control signal so that the adjusted output signal, after being input into the one or more radiation energy sources (21), can make the frequency of light of the one or more radiation energy sources (21) is within the predetermined frequency range of infrared light.

8. The method of claim 6 or 7, wherein when the frequency of light is outside of the predetermined frequency range of infrared light, adjusting the control signal so that the adjusted output signal, after being input into the one or more radiation energy sources (21), can make the frequency of light of the one or more radiation energy sources (21) is within the predetermined frequency range of infrared light, comprises:
varying the percentage of the zero-amplitude portion, with the percentage corresponding to the power of the output signal.

9. The method of claim 6, wherein the power supply circuit structure (100) further comprises a monitoring circuit (17), configured to monitor the magnitude of the alternating current electrical signal, the method further comprising:
receiving the magnitude of the alternating current electrical signal, and adjusting the control signal based on the magnitude of the alternating current electrical signal,
or wherein
the power supply circuit structure (100) further comprises an output rectifier unit (181) and an output filter unit (182), the output rectifier unit (181) is connected to the output filter unit (182), the output rectifier unit (181) is configured to rectify the output signal in order to obtain an output rectified signal, the output filter unit (182) is configured to filter the output rectified signal in order to obtain an output filtered signal, the method further comprising:
when the power of the output filtered signal does not satisfy preset condition, adjusting the control signal so that the power of the output filtered signal obtained after adjustment satisfies the preset condition.

10. The method of supplying power of claim 6, wherein determining the zero-crossing moments of control signal based on the zero-crossing detection signal comprises:
generating a power control signal based on the magnitude of the alternating current electrical signal, the predetermined frequency range of infrared light and the zero-crossing detection signal;
generating the control signal based on the power control signal, and determining the zero-crossing moments of the control signal based on the zero-crossing detection signal.

## Patentansprüche

1. Trocknungsvorrichtung (200), umfassend:
ein Gehäuse (22);
eine oder mehrere Strahlungsenergiequellen (21); und
eine Stromversorgungsschaltungsstruktur (100) zum Anschließen einer Stromquelle (300) und zum Versorgen der einen oder der mehreren Strahlungsenergiequellen (21) mit Strom, wobei die eine oder die mehreren Strahlungsenergiequellen (21) in der Lage sind, die Stromversorgungsschaltungsstruktur (100) anzuschließen;
wobei die eine oder die mehreren Strahlungsenergiequellen (21) und die Stromversorgungsschaltungsstruktur (100) innerhalb des Gehäuses (22) angeordnet sind;
wobei die Stromquelle (300) ein periodisch variierendes elektrisches Wechselstromsignal bereitstellt, wobei die eine oder die mehreren Strahlungsenergiequellen (21) in der Lage sind, Licht eines vorbestimmten Frequenzbereichs von Infrarotlicht abzustrahlen, wobei die Stromversorgungsschaltungsstruktur (100) umfasst:
eine Hauptsteuerschaltung (11), die dazu eingerichtet ist, das elektrische Wechselstromsignal zu empfangen und zu erfassen, ein Steuersignal zu erzeugen, wobei das Steuersignal einen Abschnitt mit Nullamplitude umfasst; und
eine Signalleitungsschaltung (12), die dazu eingerichtet ist, das elektrische Wechselstromsignal und das Steuersignal zu empfangen und ein Ausgangssignal zu erzeugen, wobei die Größe des Ausgangssignals in dem Abschnitt mit Nullamplitude des Steuersignals Null ist und im Rest des Steuersignals die Größe des Ausgangssignals der Größe des elektrischen Wechselstromsignals entspricht;
wobei die Hauptsteuerschaltung (11) dazu eingerichtet ist, den Prozentsatz des Abschnitts mit Nullamplitude zu variieren, und die Signalleitungsschaltung (12) dazu eingerichtet ist, die Leistung des Ausgangssignals entsprechend anzupassen;
wobei die Trocknungsvorrichtung (200) dazu eingerichtet ist, das Ausgangssignal an die eine oder die mehreren Strahlungsenergiequellen (21) weiterzuleiten, um die von der Stromversorgungsschaltungsstruktur (100) an die eine oder die mehreren Strahlungsenergiequellen (21) ausgegebene Leistung anzupassen, so dass die eine oder die mehreren Strahlungsenergiequellen (21) dazu eingerichtet sind, Licht innerhalb des vorbestimmten Frequenzbereichs von Infrarotlicht abzustrahlen;
wobei die Hauptsteuerschaltung (11) ferner eine Nulldurchgangserfassungsschaltung (19) umfasst, wobei, wenn das elektrische Wechselstromsignal eingegeben wird, die Nulldurchgangserfassungsschaltung (19) dazu eingerichtet ist, ein Nulldurchgangserfassungssignal auf der Grundlage der Nulldurchgangsmomente des elektrischen Wechselstromsignals zu erzeugen, und die Hauptsteuerschaltung (11) das Nulldurchgangserfassungssignal empfängt und die Nulldurchgangsmomente des Steuersignals auf der Grundlage des Nulldurchgangserfassungssignals bestimmt;
wobei die Stromversorgungsschaltungsstruktur (100) ferner eine Abtasteinheit (14) umfasst, die dazu eingerichtet ist, einen elektrischen Parameterwert des Ausgangssignals abzutasten, und die Hauptsteuerschaltung (11) das Steuersignal anpasst, wenn der durch das Abtasten erhaltene elektrische Parameterwert außerhalb eines vorbestimmten Parameterschwellenwertbereichs liegt, so dass der nach der Anpassung erhaltene elektrische Parameterwert innerhalb des vorbestimmten Parameterschwellenwertbereichs liegt, wobei der elektrische Parameterwert ein Spannungswert oder ein Stromwert oder eine Leistung des Ausgangssignals ist.

2. Trocknungsvorrichtung (200) nach Anspruch 1, wobei die Stromversorgungsschaltungsstruktur (100) ferner einen Lichtsensor (13) umfasst, der dazu eingerichtet ist, die Lichtfrequenz der einen oder der mehreren Strahlungsenergiequellen (21) zu erfassen, und wenn die Lichtfrequenz außerhalb des vorbestimmten Frequenzbereichs von Infrarotlicht liegt, die Hauptsteuerschaltung (11) das Steuersignal so anpasst, dass das angepasste Ausgangssignal, nachdem es in die eine oder die mehreren Strahlungsenergiequellen (21) eingegeben wurde, in der Lage ist, zu bewirken, dass die Lichtfrequenz der einen oder der mehreren Strahlungsenergiequellen (21) innerhalb des vorbestimmten Frequenzbereichs von Infrarotlicht liegt.

3. Trocknungsvorrichtung (200) nach Anspruch 1, wobei die Hauptsteuerschaltung (11) dazu eingerichtet ist, den Prozentsatz des Abschnitts mit Nullamplitude zu variieren, und der Signalleitungskreis (12) ist so konfiguriert, dass er die Leistung des Ausgangssignals entsprechend anpasst, was wiederum bewirkt, dass der elektrische Parameterwert des Ausgangssignals einen voreingestellten elektrischen Parameterwert erreicht.

4. Trocknungsvorrichtung (200) nach Anspruch 1, wobei die Stromversorgungsschaltungsstruktur (100) eine Gleichrichterschaltung (16) umfasst, die Hauptsteuerschaltung (11) eine Steuereinheit (111) umfasst, die Gleichrichterschaltung (16) zwischen der Steuereinheit (111) und der Stromquelle (300) angeschlossen ist und die Gleichrichterschaltung (16) das elektrische Wechselstromsignal empfängt und ein elektrisches Gleichstromsignal mit einer vorbestimmten Amplitude ausgibt, um die Steuereinheit (111) mit Strom zu versorgen,
oder wobei
die Stromversorgungsschaltungsstruktur (100) ferner eine Überwachungsschaltung (17) umfasst, die dazu eingerichtet ist, die Größe des elektrischen Wechselstromsignals zu überwachen, und die Hauptsteuerschaltung (11) die Größe empfängt und das Steuersignal anpasst,
oder wobei
die Stromversorgungsschaltungsstruktur (100) ferner eine Ausgangsgleichrichtereinheit (181) und eine Ausgangsfiltereinheit (182) umfasst, wobei die Ausgangsgleichrichtereinheit (181) mit der Ausgangsfiltereinheit (182) verbunden ist, die Ausgangsgleichrichtereinheit (181) dazu eingerichtet ist, das Ausgangssignal gleichzurichten, um ein gleichgerichtetes Ausgangssignal zu erhalten, die Ausgangsfiltereinheit (182) dazu eingerichtet ist, das gleichgerichtete Ausgangssignal zu filtern, um ein gefiltertes Ausgangssignal zu erhalten, wobei, wenn die Leistung des gefilterten Ausgangssignals eine voreingestellte Bedingung nicht erfüllt, die Hauptsteuerschaltung (11) das Steuersignal anpasst, so dass die Leistung des gefilterten Ausgangssignals, die nach der Anpassung erhalten wird, die voreingestellte Bedingung erfüllt.

5. Trocknungsvorrichtung (200) nach Anspruch 1, wobei die Hauptsteuerschaltung (11) ferner umfasst:
eine Steuereinheit (111), die mit der Nulldurchgangserfassungsschaltung (19) verbunden ist, wobei die Steuereinheit (111) ein Leistungssteuersignal auf der Grundlage der Größe des elektrischen Wechselstromsignals, des vorbestimmten Frequenzbereichs von Infrarotlicht und des Nulldurchgangserfassungssignals erzeugt;
eine Zufallsphasenschaltung (112), die zwischen der Steuereinheit (111) und der Signalleitungsschaltung (12) angeschlossen ist, wobei die Zufallsphasenschaltung (112) dazu eingerichtet ist, das Steuersignal auf der Grundlage des Leistungssteuersignals zu erzeugen und die Nulldurchgangsmomente des Steuersignals auf der Grundlage des Nulldurchgangserfassungssignals zu bestimmen.

6. Verfahren zum Versorgen einer Stromversorgungsschaltungsstruktur (100) mit Strom, wobei die Stromversorgungsschaltungsstruktur (100) zum Anschließen einer Stromquelle (300) und zum Versorgen einer oder mehrerer Strahlungsenergiequellen (21) mit Strom dient, wobei die Stromquelle (300) ein periodisch variierendes elektrisches Wechselstromsignal bereitstellt, wobei die eine oder die mehreren Strahlungsenergiequellen (21) in der Lage sind, Licht eines vorbestimmten Frequenzbereichs von Infrarotlicht abzustrahlen, wobei die Stromversorgungsschaltungsstruktur (100) ferner eine Abtasteinheit (14) umfasst, die dazu eingerichtet ist, einen elektrischen Parameterwert des Ausgangssignals abzutasten, wobei das Verfahren umfasst:
Empfangen und Erfassen des elektrischen Wechselstromsignals;
Erzeugen eines Steuersignals, wobei das Steuersignal einen Abschnitt mit Nullamplitude umfasst, wobei beim Prozess des Erzeugens eines Ausgangssignals auf der Grundlage sowohl des elektrischen Wechselstromsignals als auch des Steuersignals die Größe des Ausgangssignals während des Abschnitts mit Nullamplitude des Steuersignals Null ist und im Rest des Steuersignals die Größe des Ausgangssignals der Größe des elektrischen Wechselstromsignals entspricht;
Anpassen des Steuersignals, wenn der durch das Abtasten erhaltene elektrische Parameterwert außerhalb eines vorbestimmten Parameterschwellenwertbereichs liegt, so dass der nach der Anpassung erhaltene elektrische Parameterwert innerhalb des vorbestimmten Parameterschwellenwertbereichs liegt, wobei der elektrische Parameterwert ein Spannungswert oder ein Stromwert oder eine Leistung des Ausgangssignals ist; und
Weiterleiten des Ausgangssignals an die eine oder die mehreren Strahlungsenergiequellen (21), um die von der Stromversorgungsschaltungsstruktur (100) an die eine oder die mehreren Strahlungsenergiequellen (21) ausgegebene Leistung anzupassen, so dass die eine oder die mehreren Strahlungsenergiequellen (21) dazu eingerichtet sind, Licht innerhalb des vorbestimmten Frequenzbereichs von Infrarotlicht abzustrahlen;
wobei das Empfangen und Erfassen des elektrischen Wechselstromsignals umfasst:
Empfangen eines Nulldurchgangserfassungssignals, wobei das Nulldurchgangserfassungssignal auf der Grundlage der Nulldurchgangsmomente des elektrischen Wechselstromsignals gebildet wird; und
wobei das Erzeugen des Steuersignals umfasst: Bestimmen der Nulldurchgangsmomente des Steuersignals auf der Grundlage des Nulldurchgangserfassungssignals; und
wobei das Anpassen des Steuersignals, wenn der durch das Abtasten erhaltene elektrische Parameterwert außerhalb eines vorbestimmten Parameterschwellenwertbereichs liegt, so dass der nach der Anpassung erhaltene elektrische Parameterwert innerhalb des vorbestimmten Parameterschwellenwertbereichs liegt, das Variieren des Prozentsatzes des Abschnitts mit Nullamplitude umfasst, wobei der Prozentsatz der Leistung des Ausgangssignals entspricht.

7. Verfahren nach Anspruch 6, wobei die Stromversorgungsschaltungsstruktur (100) ferner einen Lichtsensor (13) umfasst, wobei der Lichtsensor (13) zum Erfassen der Lichtfrequenz der einen oder der mehreren Strahlungsenergiequellen (21) dient, wobei das Verfahren ferner umfasst:
wenn die Lichtfrequenz außerhalb des vorbestimmten Frequenzbereichs von Infrarotlicht liegt, Anpassen des Steuersignals, so dass das angepasste Ausgangssignal, nachdem es in die eine oder die mehreren Strahlungsenergiequellen (21) eingegeben wurde, bewirken kann, dass die Lichtfrequenz der einen oder der mehreren Strahlungsenergiequellen (21) innerhalb des vorbestimmten Frequenzbereichs von Infrarotlicht liegt.

8. Verfahren nach Anspruch 6 oder 7, wobei, wenn die Lichtfrequenz außerhalb des vorbestimmten Frequenzbereichs von Infrarotlicht liegt, das Anpassen des Steuersignals, so dass das angepasste Ausgangssignal, nachdem es in die eine oder die mehreren Strahlungsenergiequellen (21) eingegeben wurde, bewirken kann, dass die Lichtfrequenz der einen oder der mehreren Strahlungsenergiequellen (21) innerhalb des vorbestimmten Frequenzbereichs von Infrarotlicht liegt, umfasst:
Variieren des Prozentsatzes des Abschnitts mit Nullamplitude, wobei der Prozentsatz der Leistung des Ausgangssignals entspricht.

9. Verfahren nach Anspruch 6, wobei die Stromversorgungsschaltungsstruktur (100) ferner eine Überwachungsschaltung (17) umfasst, die dazu eingerichtet ist, die Größe des elektrischen Wechselstromsignals zu überwachen, wobei das Verfahren ferner umfasst:
Empfangen der Größe des elektrischen Wechselstromsignals und Anpassen des Steuersignals auf der Grundlage der Größe des elektrischen Wechselstromsignals,
oder wobei
die Stromversorgungsschaltungsstruktur (100) ferner eine Ausgangsgleichrichtereinheit (181) und eine Ausgangsfiltereinheit (182) umfasst, die Ausgangsgleichrichtereinheit (181) mit der Ausgangsfiltereinheit (182) verbunden ist, die Ausgangsgleichrichtereinheit (181) dazu eingerichtet ist, das Ausgangssignal gleichzurichten, um ein gleichgerichtetes Ausgangssignal zu erhalten, die Ausgangsfiltereinheit (182) dazu eingerichtet ist, das gleichgerichtete Ausgangssignal zu filtern, um ein gefiltertes Ausgangssignal zu erhalten, wobei das Verfahren ferner umfasst:
wenn die Leistung des gefilterten Ausgangssignals eine voreingestellte Bedingung nicht erfüllt, Anpassen des Steuersignals, so dass die Leistung des gefilterten Ausgangssignals, die nach der Anpassung erhalten wird, die voreingestellte Bedingung erfüllt.

10. Verfahren zum Versorgen mit Strom nach Anspruch 6, wobei das Bestimmen der Nulldurchgangsmomente des Steuersignals auf der Grundlage des Nulldurchgangserfassungssignals umfasst:
Erzeugen eines Leistungssteuersignals auf der Grundlage der Größe des elektrischen Wechselstromsignals, des vorbestimmten Frequenzbereichs von Infrarotlicht und des Nulldurchgangserfassungssignals;
Erzeugen des Steuersignals auf der Grundlage des Leistungssteuersignals und Bestimmen der Nulldurchgangsmomente des Steuersignals auf der Grundlage des Nulldurchgangserfassungssignals.

## Revendications

1. Dispositif de séchage (200) comprenant:
un boîtier (22);
une ou plusieurs sources d'énergie de rayonnement (21); et
une structure de circuit d'alimentation électrique (100), pour connecter une source d'alimentation (300) et fournir de la puissance à l'une ou aux plusieurs sources d'énergie de rayonnement (21), dans lequel l'une ou les plusieurs sources d'énergie de rayonnement (21) sont capables de connecter la structure de circuit d'alimentation électrique (100);
dans lequel l'une ou les plusieurs sources d'énergie de rayonnement (21) et la structure de circuit d'alimentation électrique (100) sont agencées à l'intérieur du boîtier (22);
dans lequel la source d'alimentation (300) fournit un signal électrique de courant alternatif variant périodiquement, l'une ou les plusieurs sources d'énergie de rayonnement (21) sont capables de rayonner de la lumière d'une plage de fréquences prédéterminée de lumière infrarouge, la structure de circuit d'alimentation électrique (100) comprend:
un circuit de commande principal (11), configuré pour recevoir et détecter le signal électrique de courant alternatif, générer un signal de commande, dans lequel le signal de commande comprend une portion d'amplitude nulle; et
un circuit de conduction de signal (12), configuré pour recevoir le signal électrique de courant alternatif et le signal de commande, et générer un signal de sortie, dans lequel l'ampleur du signal de sortie est nulle dans la portion d'amplitude nulle du signal de commande, et dans le reste du signal de commande, l'ampleur du signal de sortie correspond à l'ampleur du signal électrique de courant alternatif;
dans lequel le circuit de commande principal (11) est configuré pour faire varier le pourcentage de la portion d'amplitude nulle, et le circuit de conduction de signal (12) est configuré pour ajuster de manière correspondante la puissance du signal de sortie;
dans lequel le dispositif de séchage (200) est configuré pour passer le signal de sortie à l'une ou aux plusieurs sources d'énergie de rayonnement (21) pour ajuster la puissance délivrée depuis la structure de circuit d'alimentation électrique (100) vers l'une ou les plusieurs sources d'énergie de rayonnement (21), de telle sorte que l'une ou les plusieurs sources d'énergie de rayonnement (21) sont configurées pour rayonner de la lumière à l'intérieur de la plage de fréquences prédéterminée de lumière infrarouge;
dans lequel le circuit de commande principal (11) comprend en outre un circuit de détection de passage par zéro (19), lorsque le signal électrique de courant alternatif est entré, le circuit de détection de passage par zéro (19) est configuré pour générer un signal de détection de passage par zéro sur la base des moments de passage par zéro du signal électrique de courant alternatif, et le circuit de commande principal (11) reçoit le signal de détection de passage par zéro et détermine les moments de passage par zéro du signal de commande sur la base du signal de détection de passage par zéro;
dans lequel la structure de circuit d'alimentation électrique (100) comprend en outre une unité d'échantillonnage (14), configurée pour échantillonner une valeur de paramètre électrique du signal de sortie, et le circuit de commande principal (11) ajuste le signal de commande lorsque la valeur de paramètre électrique obtenue depuis l'échantillonnage est en dehors d'une plage de seuil de paramètre prédéterminée de sorte que la valeur de paramètre électrique obtenue après ajustement est à l'intérieur de la plage de seuil de paramètre prédéterminée, dans lequel la valeur de paramètre électrique est une valeur de tension ou une valeur de courant ou une puissance du signal de sortie.

2. Dispositif de séchage (200) selon la revendication 1, dans lequel la structure de circuit d'alimentation électrique (100) comprend en outre un capteur de lumière (13), configuré pour détecter la fréquence de lumière de l'une ou des plusieurs sources d'énergie de rayonnement (21), et lorsque la fréquence de lumière est en dehors de la plage de fréquences prédéterminée de lumière infrarouge, le circuit de commande principal (11) ajuste le signal de commande de sorte que le signal de sortie ajusté, après avoir été entré dans l'une ou les plusieurs sources d'énergie de rayonnement (21), capable de faire que la fréquence de lumière de l'une ou des plusieurs sources d'énergie de rayonnement (21) à l'intérieur de la plage de fréquences prédéterminée de lumière infrarouge.

3. Dispositif de séchage (200) selon la revendication 1, dans lequel le circuit de commande principal (11) est configuré pour faire varier le pourcentage de la portion d'amplitude nulle, et le circuit de conduction de signal (12) est configuré pour ajuster en conséquence la puissance du signal de sortie, ce qui à son tour fait que la valeur de paramètre électrique du signal de sortie atteint une valeur de paramètre électrique prédéfinie.

4. Dispositif de séchage (200) selon la revendication 1, dans lequel la structure de circuit d'alimentation électrique (100) comprend un circuit redresseur (16), le circuit de commande principal (11) comprend une unité de commande (111), le circuit redresseur (16) est connecté entre l'unité de commande (111) et la source d'alimentation (300), et le circuit redresseur (16) reçoit le signal électrique de courant alternatif et délivre un signal électrique de courant continu ayant une amplitude prédéterminée pour alimenter l'unité de commande (111),
ou dans lequel
la structure de circuit d'alimentation électrique (100) comprend en outre un circuit de surveillance (17), configuré pour surveiller l'ampleur du signal électrique de courant alternatif, et le circuit de commande principal (11) reçoit l'ampleur et ajuste le signal de commande,
ou dans lequel
la structure de circuit d'alimentation électrique (100) comprend en outre une unité de redressement de sortie (181) et une unité de filtrage de sortie (182), dans lequel l'unité de redressement de sortie (181) est connectée à l'unité de filtrage de sortie (182), l'unité de redressement de sortie (181) est configurée pour redresser le signal de sortie afin d'obtenir un signal redressé de sortie, l'unité de filtrage de sortie (182) est configurée pour filtrer le signal redressé de sortie afin d'obtenir un signal filtré de sortie, lorsque la puissance du signal filtré de sortie ne satisfait pas la condition prédéfinie, le circuit de commande principal (11) ajuste le signal de commande de sorte que la puissance du signal filtré de sortie obtenue après ajustement satisfait la condition prédéfinie.

5. Dispositif de séchage (200) selon la revendication 1, dans lequel le circuit de commande principal (11) comprend en outre:
une unité de commande (111), connectée au circuit de détection de passage par zéro (19), dans lequel l'unité de commande (111) génère un signal de commande de puissance sur la base de l'ampleur du signal électrique de courant alternatif, de la plage de fréquences prédéterminée de lumière infrarouge et du signal de détection de passage par zéro;
un circuit à phase aléatoire (112), connecté entre l'unité de commande (111) et le circuit de conduction de signal (12), dans lequel le circuit à phase aléatoire (112) est configuré pour générer le signal de commande sur la base du signal de commande de puissance et déterminer les moments de passage par zéro du signal de commande sur la base du signal de détection de passage par zéro.

6. Procédé d'alimentation électrique pour une structure de circuit d'alimentation électrique (100), la structure de circuit d'alimentation électrique (100) pour connecter une source d'alimentation (300) et fournir de la puissance à une ou plusieurs sources d'énergie de rayonnement (21), la source d'alimentation (300) fournissant un signal électrique de courant alternatif variant périodiquement, l'une ou les plusieurs sources d'énergie de rayonnement (21) capables de rayonner de la lumière d'une plage de fréquences prédéterminée de lumière infrarouge, dans lequel la structure de circuit d'alimentation électrique (100) comprend en outre une unité d'échantillonnage (14), configurée pour échantillonner une valeur de paramètre électrique du signal de sortie, dans lequel le procédé comprend:
recevoir et détecter le signal électrique de courant alternatif;
générer un signal de commande, dans lequel le signal de commande comprend une portion d'amplitude nulle, dans le processus de génération d'un signal de sortie sur la base à la fois du signal électrique de courant alternatif et du signal de commande, l'ampleur du signal de sortie est nulle durant la portion d'amplitude nulle du signal de commande, et dans le reste du signal de commande, l'ampleur du signal de sortie correspond à l'ampleur du signal électrique de courant alternatif;
ajuster le signal de commande lorsque la valeur de paramètre électrique obtenue depuis l'échantillonnage est en dehors d'une plage de seuil de paramètre prédéterminée de sorte que la valeur de paramètre électrique obtenue après ajustement est à l'intérieur de la plage de seuil de paramètre prédéterminée, dans lequel la valeur de paramètre électrique est une valeur de tension ou une valeur de courant ou une puissance du signal de sortie; et
passer le signal de sortie à l'une ou aux plusieurs sources d'énergie de rayonnement (21) pour ajuster la puissance délivrée depuis la structure de circuit d'alimentation électrique (100) vers l'une ou les plusieurs sources d'énergie de rayonnement (21), de telle sorte que l'une ou les plusieurs sources d'énergie de rayonnement (21) sont configurées pour rayonner de la lumière à l'intérieur de la plage de fréquences prédéterminée de lumière infrarouge;
dans lequel recevoir et détecter le signal électrique de courant alternatif comprend:
- recevoir un signal de détection de passage par zéro, dans lequel le signal de détection de passage par zéro est formé sur la base des moments de passage par zéro du signal électrique de courant alternatif; et
- générer le signal de commande, comprenant: déterminer les moments de passage par zéro du signal de commande sur la base du signal de détection de passage par zéro; et
dans lequel ajuster le signal de commande lorsque la valeur de paramètre électrique obtenue depuis l'échantillonnage est en dehors d'une plage de seuil de paramètre prédéterminée de sorte que la valeur de paramètre électrique obtenue après ajustement est à l'intérieur de la plage de seuil de paramètre prédéterminée comprend faire varier le pourcentage de la portion d'amplitude nulle, avec le pourcentage correspondant à la puissance du signal de sortie.

7. Procédé selon la revendication 6, dans lequel la structure de circuit d'alimentation électrique (100) comprend en outre un capteur de lumière (13), le capteur de lumière (13) pour détecter la fréquence de lumière de l'une ou des plusieurs sources d'énergie de rayonnement (21), le procédé comprenant en outre:
lorsque la fréquence de lumière est en dehors de la plage de fréquences prédéterminée de lumière infrarouge, ajuster le signal de commande de sorte que le signal de sortie ajusté, après avoir été entré dans l'une ou les plusieurs sources d'énergie de rayonnement (21), peut faire que la fréquence de lumière de l'une ou des plusieurs sources d'énergie de rayonnement (21) est à l'intérieur de la plage de fréquences prédéterminée de lumière infrarouge.

8. Procédé selon la revendication 6 ou 7, dans lequel lorsque la fréquence de lumière est en dehors de la plage de fréquences prédéterminée de lumière infrarouge, ajuster le signal de commande de sorte que le signal de sortie ajusté, après avoir été entré dans l'une ou les plusieurs sources d'énergie de rayonnement (21), peut faire que la fréquence de lumière de l'une ou des plusieurs sources d'énergie de rayonnement (21) est à l'intérieur de la plage de fréquences prédéterminée de lumière infrarouge, comprend:
faire varier le pourcentage de la portion d'amplitude nulle, avec le pourcentage correspondant à la puissance du signal de sortie.

9. Procédé selon la revendication 6, dans lequel la structure de circuit d'alimentation électrique (100) comprend en outre un circuit de surveillance (17), configuré pour surveiller l'ampleur du signal électrique de courant alternatif, le procédé comprenant en outre:
recevoir l'ampleur du signal électrique de courant alternatif, et ajuster le signal de commande sur la base de l'ampleur du signal électrique de courant alternatif,
ou dans lequel
la structure de circuit d'alimentation électrique (100) comprend en outre une unité de redressement de sortie (181) et une unité de filtrage de sortie (182), l'unité de redressement de sortie (181) est connectée à l'unité de filtrage de sortie (182), l'unité de redressement de sortie (181) est configurée pour redresser le signal de sortie afin d'obtenir un signal redressé de sortie, l'unité de filtrage de sortie (182) est configurée pour filtrer le signal redressé de sortie afin d'obtenir un signal filtré de sortie, le procédé comprenant en outre:
lorsque la puissance du signal filtré de sortie ne satisfait pas la condition prédéfinie, ajuster le signal de commande de sorte que la puissance du signal filtré de sortie obtenue après ajustement satisfait la condition prédéfinie.

10. Procédé d'alimentation électrique selon la revendication 6, dans lequel déterminer les moments de passage par zéro du signal de commande sur la base du signal de détection de passage par zéro comprend:
générer un signal de commande de puissance sur la base de l'ampleur du signal électrique de courant alternatif, de la plage de fréquences prédéterminée de lumière infrarouge et du signal de détection de passage par zéro;
générer le signal de commande sur la base du signal de commande de puissance, et déterminer les moments de passage par zéro du signal de commande sur la base du signal de détection de passage par zéro.
